(19) Europäisches Patentamt
European Patent Office
Office européen des brevets

(11) **EP 4 741 042 A1**

(12) **EUROPEAN PATENT APPLICATION**
published in accordance with Art. 153(4) EPC

(43) Date of publication:
**13.05.2026 Bulletin 2026/20**

(21) Application number: **24835761.8**

(22) Date of filing: **05.04.2024**

(51) International Patent Classification (IPC):
**B01D 53/14** (2006.01)   **B01D 53/62** (2006.01)
**B01D 53/78** (2006.01)

(52) Cooperative Patent Classification (CPC):
**B01D 53/14; B01D 53/62; B01D 53/78**

(86) International application number:
**PCT/JP2024/014059**

(87) International publication number:
**WO 2025/009239 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.07.2023 JP 2023110796**

(71) Applicants:
• **KABUSHIKI KAISHA KOBE SEIKO SHO (KOBE STEEL, LTD.)**
**Hyogo 651-8585 (JP)**
• **NATIONAL UNIVERSITY CORPORATION TOKAI NATIONAL**
**HIGHER EDUCATION AND RESEARCH SYSTEM**
**Nagoya-shi, Aichi 464-8601 (JP)**

(72) Inventors:
• **MAEDA, Norihide**
  Kobe-shi, Hyogo 651-2271 (JP)
• **KISHIMOTO, Akira**
  Kobe-shi, Hyogo 651-2271 (JP)
• **YOSHIZAWA, Mai**
  Kobe-shi, Hyogo 651-2271 (JP)
• **MACHIDA, Hiroshi**
  Nagoya-shi, Aichi 464-8601 (JP)
• **NORINAGA, Koyo**
  Nagoya-shi, Aichi 464-8601 (JP)

(74) Representative: **TBK**
**Bavariaring 4-6**
**80336 München (DE)**

(54) **GAS TREATMENT APPARATUS AND GAS TREATMENT METHOD**

(57)   A gas treatment apparatus includes: an absorber that brings a gas to be treated containing an acidic compound and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; a regenerator that separates the acidic compound from the treatment liquid; and a treatment liquid recovery unit that brings the second phase portion, having flowed out of the absorber, into contact with a treatment liquid entraining gas in the absorber to recover the treatment liquid entrained in the treatment liquid entraining gas.

FIG.1

EP 4 741 042 A1

**Description**

**Technical Field**

The present invention relates to a gas treatment apparatus and a gas treatment method.

**Background Art**

In recent years, carbon dioxide is considered to have a large influence on global warming. As an effective measure against this global warming problem, a technique of recovering CO2 from a large volume gas (CO2-containing gas) containing carbon dioxide (CO2) has attracted attention. Methods for recovering CO2 include various methods, and examples thereof include a chemical absorption method such as an amine absorption method. In the chemical absorption method, an alkaline aqueous solution such as an aqueous amine solution is used as a treatment liquid, and a CO2-containing gas is brought into contact with the treatment liquid, whereby the treatment liquid is made to absorb the acidic compound (CO2) in the gas. Then, the treatment liquid having absorbed the acidic compound is heated to release the acidic compound from the treatment liquid, and the acidic compound is recovered. A chemical absorption method using a treatment liquid containing an amine compound is disclosed in, for example, Patent Literature 1 cited below. In the gas treatment apparatus disclosed in Patent Literature 1, a treatment liquid containing an amine compound, an organic solvent, and water is used, and as the treatment liquid, a treatment liquid that absorbs an acidic compound and phase-separates into phases differing the content of the acidic compound is selected. The gas treatment apparatus disclosed in Patent Literature 1 is provided with a gas supply unit that supplies a separation promoting gas such as hydrogen gas to a regenerator. In this apparatus, since the separation promoting gas is supplied to the regenerator, energy required for separating and recovering the acidic compound is reduced.

In such an amine absorption method using a treatment liquid containing an amine compound, it is known that the amine compound is entrained in the treated gas after the acidic compound is separated as disclosed in Patent Literature 2 cited below. To prevent the amine compound from being released outside the system together with the treated gas, the gas treatment apparatus disclosed in Patent Literature 2 is provided, in an absorber, with a water washing unit that brings the decarbonated exhaust gas from which CO2 has been removed into contact with washing water to remove a substance accompanying the decarbonated exhaust gas. When the amine compound is entrained in the treated gas, the amine compound may be entrained as vaporized gas or may be entrained as mist (liquid).

When a water washing unit is provided in an absorber as in the gas treatment apparatus disclosed in Patent Literature 2, it is possible to prevent an amine compound from being discharged to the outside of the system, but since a treatment liquid comes into contact with washing water, there is a problem that the treatment liquid circulating between the absorber and a regenerator is diluted.

On the other hand, when, for example, hydrogen gas is supplied to a regenerator as a separation promoting gas as in the gas treatment apparatus disclosed in Patent Literature 1, moisture close to saturation may be retained in the hydrogen gas when the hydrogen gas is obtained by water electrolysis. In this case, since the moisture retained in the hydrogen gas is supplied to the regenerator, there is a problem that the treatment liquid circulating between the absorber and the regenerator is diluted.

When the treatment liquid circulating between the absorber and the regenerator is diluted as in the gas treatment apparatus disclosed in Patent Literature 1 or 2, the performance to separate the acidic compound by the treatment liquid may be deteriorated.

**Citation List**

**Patent Literature**

Patent Literature 1: JP 6906766 B2
Patent Literature 2: JP 5968159 B2

**Summary of Invention**

An object of the present invention is to suppress dilution of a treatment liquid with water in a gas treatment apparatus or a gas treatment method for separating an acidic compound from a gas to be treated using a treatment liquid containing an amine.

A gas treatment apparatus according to one aspect of the present invention includes: an absorber that brings a gas to be treated containing an acidic compound that generates an acid through dissolution in water and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; a regenerator that heats the treatment liquid having absorbed the acidic compound to separate the acidic compound from the treatment liquid; and a treatment liquid recovery unit that brings at least one of the first phase portion and the second phase portion, both having flowed out of the absorber, into contact with a treatment liquid entraining gas to recover the treatment liquid entrained in the treatment liquid entraining gas, the treatment liquid entraining gas being either a gas in the absorber after the acidic compound is absorbed from the gas to be treated into the treatment liquid or a gas in the regenerator and containing the acidic compound.

A gas treatment apparatus according to one aspect of the present invention includes: an absorber that brings a gas to be treated containing an acidic compound that generates an acid through dissolution in water and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; a regenerator that heats the treatment liquid having absorbed the acidic compound to separate the acidic compound from the treatment liquid; a separation promoting gas supply unit that supplies a separation promoting gas that promotes separation of the acidic compound from the treatment liquid to the regenerator; and a moisture removing unit that removes the moisture contained in the separation promoting gas from the separation promoting gas to be supplied to the regenerator.

A gas treatment method according to one aspect of the present invention includes: in an absorber, bringing a gas to be treated containing an acidic compound that generates an acid through dissolution in water and a treatment liquid into contact with each other to make the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; in a regenerator, heating the treatment liquid having absorbed the acidic compound to separate the acidic compound from the treatment liquid; causing the first phase portion and the second phase portion to flow out of the absorber; and bringing at least one of the first phase portion and the second phase portion, both having flowed out of the absorber, into contact with a treatment liquid entraining gas to recover the treatment liquid entrained in the treatment liquid entraining gas, treatment liquid entraining gas being either a gas in the absorber after the acidic compound is absorbed from the gas to be treated into the treatment liquid or a gas in the regenerator and containing the acidic compound.

A gas treatment method according to one aspect of the present invention includes: in an absorber, bringing a gas to be treated containing an acidic compound that generates an acid through dissolution in water and a treatment liquid into contact with each other to make the treatment liquid absorb the acidic compound contained in the gas to be treated, the treatment liquid phase-separating into a first phase portion mainly containing an amine phase and a second phase portion mainly containing a component phase other than an amine through absorption of the acidic compound; in a regenerator, heating the treatment liquid having absorbed the acidic compound to separate the acidic compound from the treatment liquid; removing moisture contained in a separation promoting gas from the separation promoting gas that promotes separation of the acidic compound from the treatment liquid; and supplying the separation promoting gas from which the moisture has been removed to the regenerator.

**Brief Description of Drawings**

FIG. 1 is a diagram schematically illustrating a gas treatment apparatus according to a first embodiment.
FIG. 2 is a diagram schematically illustrating a modification of the first embodiment in which a positional relationship between the treatment liquid recovery unit and the water washing unit is changed in the absorber.
FIG. 3 is a diagram schematically illustrating a modification of the first embodiment in which a positional relationship between the treatment liquid recovery unit and the water washing unit is changed in the absorber.
FIG. 4 is a diagram schematically illustrating a modification in which the separator is omitted in the first embodiment.
FIG. 5 is a diagram schematically illustrating a modification configured such that a first phase portion flowing through a first flow path portion is introduced into a treatment liquid recovery unit in the first embodiment.
FIG. 6 is a diagram schematically illustrating a modification in which a second treatment liquid recovery unit is added in the first embodiment.

FIG. 7 is a diagram schematically illustrating a modification in which a treatment liquid recovery unit is provided in a regenerator in the first embodiment.

FIG. 8 is a diagram schematically illustrating a gas treatment apparatus according to a second embodiment.

FIG. 9 is a diagram schematically illustrating a gas treatment apparatus according to a third embodiment.

FIG. 10 is a diagram schematically illustrating a modification configured such that a moisture supply path is connected to a water washing unit in the third embodiment.

FIG. 11 is a diagram schematically illustrating a modification configured such that a moisture supply path is connected to a condenser of the discharge unit in the third embodiment.

FIG. 12 is a diagram schematically illustrating a gas treatment apparatus according to a fourth embodiment.

FIG. 13 is a diagram schematically illustrating a gas treatment apparatus according to a fifth embodiment.

FIG. 14 is a diagram schematically illustrating a gas treatment apparatus according to a sixth embodiment.

FIG. 15 is a diagram schematically illustrating a gas treatment apparatus according to a seventh embodiment.

FIG. 16 is a diagram illustrating a modification in a case where a first flow path portion and a second flow path portion are provided in a part on the downstream side of a heat exchanger in the feed flow path.

FIG. 17 is a diagram illustrating a modification in a case where a heat exchanger is provided in each of the first flow path portion and the second flow path portion.

**Description of Embodiments**

Hereinafter, embodiments will be described with reference to the accompanying drawings. The following embodiments are examples embodying the present invention, and are not intended to limit the technical scope of the present invention.

(First Embodiment)

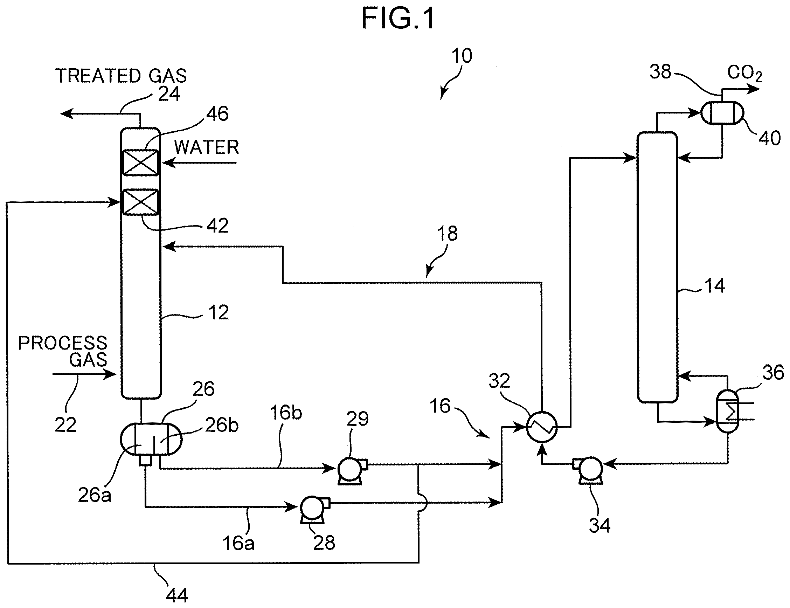

As illustrated in FIG. 1, a gas treatment apparatus 10 according to a first embodiment is an apparatus that separates an acidic compound from a gas to be treated containing the acidic compound using a treatment liquid having a property to reversibly absorb and release an acidic compound. In the present embodiment, since carbon dioxide ($CO_2$), which is an acidic compound that generates an acid through dissolution in water, is to be separated, the apparatus is effective as a countermeasure against global warming. The acidic compound is not particularly limited as long as forming an aqueous solution thereof being acidic, and examples thereof may include hydrogen chloride, carbon dioxide, sulfur dioxide, and carbon disulfide. Examples of the gas to be treated containing an acidic compound include industrial exhaust gas, process gas to be generated during purification, and natural gas.

The treatment liquid is a treatment liquid which is in a state where an amine and a second component are mixed with each other in a state before absorbing the acidic compound and which phase-separates into a first phase portion mainly containing the amine and a second phase portion mainly containing the second component through absorption of the acidic compound. The treatment liquid is, for example, an alkaline absorbent containing water, the amine, and an organic solvent as the second component, and may contain 30 wt% of the amine, 60 wt% of the organic solvent, and 10 wt% of the water.

Examples of the amine include primary amines such as 2-aminoethanol (MEA: solubility parameter = 14.3 $(cal/cm^3)^{1/2}$) and 2-(2-aminoethoxy)ethanol (AEE: solubility parameter = 12.7 $(cal/cm^3)^{1/2}$), secondary amines such as 2-(methylamino)ethanol (MAE), 2-(ethylamino)ethanol (EAE) and 2-(butylamino)ethanol (BAE), and tertiary amines such as triethanolamine (TEA), N-methyldiethanolamine (MDEA), tetramethylethylenediamine (TEMED), pentamethyldiethylenetriamine (PMDETA), hexamethyltriethylenetetramine, and bis(2-dimethylaminoethyl) ether.

Examples of the organic solvent include 1-butanol (solubility parameter = 11.3 $(cal/cm^3)^{1/2}$), 1-pentanol (solubility parameter = 11.0 $(cal/cm^3)^{1/2}$), octanol, diethylene glycol diethyl ether (DEGDEE), and diethylene glycol dimethyl ether (DEGDME), and a plurality of them may be mixed and used.

When the solubility parameter of each of the amine and the organic solvent falls within a predetermined range, the treatment liquid forms a single liquid phase in a state of not absorbing the acidic compound, but is phase-separated into a first phase portion mainly containing the amine, the portion having a high content of the acidic compound due to absorption of the acidic compound, and a second phase portion mainly containing the second component, the portion having a low content of the acidic compound. Here, the solubility parameter is represented by the following Formula (1).

[Mathematical Formula 1]

$$\delta = \sqrt{(\Delta H - RT)/V} \quad \cdots (1)$$

ΔH is a molar evaporation latent heat, R is a gas constant, T is an absolute temperature, and V is a molar volume.

[Table 1]

| Difference between solubility parameters/ Two-phase separation ability | | | Organic solvent/ Solubility parameters[(cal/cm³)^{1/2}] | | |
|---|---|---|---|---|---|
| | | | 1-butanol | 1-pentanol | DEGDEE |
| | | | 11.3 | 11.0 | 8.2 |
| Amine compound/ Solubility parameters [(cal/cm³)^{1/2}] | MEA | 14.3 | 3.0 Good | 3.3 Good | 6.1 Not miscible |
| | AEE | 12.7 | 1.4 Good | 1.7 Good | 4.5 Not miscible |
| | MAE | 12.5 | 1.2 Good | 1.5 Good | 4.4 Not miscible |
| | EAE | 12.0 | 0.7 Not separated | | 3.8 Good |

As shown in Table 1, in the absorbent containing water, the amine, and the organic solvent, when the combination of the amine and the organic solvent is selected such that a value obtained by subtracting the solubility parameter of the organic solvent from the solubility parameter of the amine is 1.1 $(cal/cm^3)^{1/2}$ or more and 4.2 $(cal/cm^3)^{1/2}$ or less, a treatment liquid that is to be two-phase separated into a first phase portion having a higher acidic compound content and mainly containing the amine and a second phase portion having a lower acidic compound content and mainly containing the second component as a result of the absorption of the acidic compound is obtained. Even in this case, before absorption of the acidic compound, the amine and the second component are mixed to form a single liquid phase.

In a case where a value of the difference between the solubility parameters is less than the above-described lower limit value, the treatment liquid may not be separated into two phases even if the treatment liquid absorbs the acidic compound. On the other hand, in a case where the value of the difference between the solubility parameters exceeds the above-described upper limit value, the treatment liquid separates into two phases before the treatment liquid absorbs the acidic compound, and in a step of bringing the treatment liquid into contact with the gas to be treated containing the acidic compound, a contact state between the treatment liquid and the gas to be treated may become uneven, and absorption efficiency may decrease. Note that "good" in Table 1 means that the treatment liquid was a single liquid phase before absorption of carbon dioxide and was separated into two liquid phases due to absorption of carbon dioxide. "Not miscible" in Table 1 means that the treatment liquid was in a two-liquid phase state before absorption of carbon dioxide, and a single liquid phase was not formed. "Not separated" in Table 1 means that the treatment liquid was still a single liquid phase after absorption of carbon dioxide.

As illustrated in FIG. 1, the gas treatment apparatus 10 includes an absorber 12, a regenerator 14, a feed flow path 16, and a return flow path 18. The gas treatment apparatus 10 includes the treatment liquid enclosed such that it can circulate between the absorber 12 and the regenerator 14. The absorber 12 is a device for bringing a gas to be treated such as a process gas into contact with a treatment liquid to make the treatment liquid absorb an acidic compound in the gas to be treated. In the present embodiment, carbon dioxide as the acidic compound is separated.

The feed flow path 16 is a flow path through which the treatment liquid having absorbed carbon dioxide in the absorber 12 (rich liquid) is extracted from the absorber 12 and then introduced into the regenerator 14. The regenerator 14 is a device for releasing carbon dioxide from the rich liquid by heating the rich liquid. The return flow path 18 is a flow path through which the treatment liquid after releasing carbon dioxide (lean liquid) is extracted from the regenerator 14 and then returned to the absorber 12.

An introduction path 22 through which the gas to be treated is supplied to the absorber 12, a discharge path 24 through which gas after treatment (treated gas) is discharged, a feed flow path 16 for sending the treatment liquid to the regenerator 14, and a return flow path 18 for returning the treatment liquid from the regenerator 14 to the absorber 12 are connected to the absorber 12. The introduction path 22 is connected to a lower portion of the absorber 12, and the discharge path 24 is connected to an upper portion of the absorber 12. The feed flow path 16 is connected to a lower portion of the absorber 12. That is, the feed flow path 16 is connected to the absorber 12 at a position where the treatment liquid accumulated in the absorber 12 as a result of coming into contact with the gas to be treated can be extracted. The return flow path 18 is connected to an upper portion of the absorber 12. That is, the return flow path 18 is connected to the absorber 12 at a position where the treatment liquid can flow down in the absorber 12.

In the absorber 12, the gas to be treated introduced through the introduction path 22 and the treatment liquid returned through the return flow path 18 come into contact with each other, whereby carbon dioxide in the gas to be treated is absorbed into the treatment liquid. In addition, a treated gas, which is a gas resulting from removal of carbon dioxide, is discharged from the absorber 12 through the discharge path 24. The absorption of carbon dioxide in the absorber 12 is an exothermic reaction. This reaction heat generated in the absorber 12 raises the temperatures of the gas to be treated, the treated gas, and the treatment liquid.

The treatment liquid having absorbed carbon dioxide in the absorber 12 (rich liquid) is led out from the absorber 12 through the feed flow path 16. The rich liquid is phase-separated into a first phase portion mainly containing an amine and a second phase portion mainly containing a second component (organic solvent). The feed flow path 16 is provided with a separator 26 for separating the phase-separated treatment liquid (rich liquid) into a treatment liquid mainly containing the first phase portion and a treatment liquid mainly containing the second phase portion. The separator 26 separates the first phase portion and the second phase portion from each other utilizing a difference in specific gravity between the first phase portion and the second phase portion, and has a structure in which a standing wall is provided in a space in the separator 26. The treatment liquid introduced into the separator 26 is introduced into the inflow side space 26a, which is one space with respect to the standing wall. Of the treatment liquid accumulated in the inflow side space 26a, the second phase portion having a smaller specific gravity is introduced into the next space 26b beyond the upper end of the standing wall. As a result, the first phase portion is mainly accumulated in the inflow side space 26a, and the second phase portion is mainly collected in the next space 26b. In this way, in the separator 26, the treatment liquid is separated into the treatment liquid mainly containing the first phase portion and the treatment liquid mainly containing the second phase portion.

The feed flow path 16 includes a first flow path portion 16a for leading out the treatment liquid (first phase portion) from the inflow side space 26a of the separator 26, and a second flow path portion 16b for leading out the treatment liquid (second phase portion) from the next space 26b of the separator 26.

The first flow path portion 16a and the second flow path portion 16b are provided with pumps 28 and 29, respectively.

The first flow path portion 16a and the second flow path portion 16b of the feed flow path 16 are both connected to the heat exchanger 32. The heat exchanger 32 exchanges heat between the treatment liquid (rich liquid) flowing through the feed flow path 16 and the treatment liquid (lean liquid) returned from the regenerator 14 to the absorber 12. Note that the heat exchanger 32 can be omitted.

The feed flow path 16 and the return flow path 18 are connected to the regenerator 14. The feed flow path 16 is connected to an upper portion of the regenerator 14. The return flow path 18 is connected to a lower portion of the regenerator 14. The return flow path 18 is provided with a pump 34.

In the regenerator 14 is stored a treatment liquid containing carbon dioxide introduced through the feed flow path 16. The regenerator 14 is provided with a heater 36 for heating the treatment liquid in the regenerator 14 to desorb carbon dioxide from the treatment liquid. In the regenerator 14, when the treatment liquid is heated, not only carbon dioxide is desorbed but also water in the treatment liquid is evaporated. The desorption of carbon dioxide from the treatment liquid is an endothermic reaction.

A supply path 38 is connected to the regenerator 14, the supply path 38 being for supplying the gas containing carbon dioxide obtained in the regenerator 14 to a destination demanding carbon dioxide. Since a mixed gas of carbon dioxide and water vapor evaporated from the treatment liquid is generated in the regenerator 14, a condenser 40 for cooling the mixed gas is provided in the supply path 38. When the mixed gas is cooled, the water vapor is condensed and thus can be separated. The condensed water obtained in the condenser 40 is usually returned to the regenerator 14. The condensed water may be returned to the absorber 12.

In the gas treatment apparatus 10, a treatment liquid containing an amine is used, and the amine may be made mist-like or vaporous to be entrained in the treated gas in the absorber 12. In the present description, a gas in which a treatment liquid having been made mist-like or vaporous is entrained is also referred to as a treatment liquid entraining gas. The gas treatment apparatus 10 is provided with a treatment liquid recovery unit 42 for recovering the amine or the second component entrained or contained in the treatment liquid entraining gas.

The treatment liquid mainly containing the second phase portion is introduced into the treatment liquid recovery unit 42 of the present embodiment through an extraction path 44 connected to the second flow path portion 16b of the feed flow path 16. Then, in the treatment liquid recovery unit 42, the second phase portion extracted from the second flow path portion 16b comes into contact with the treatment liquid entraining gas in the absorber 12. Therefore, the treatment liquid recovery unit 42 of the present embodiment mainly recovers an amine in the treatment liquid entrained or contained in the treatment liquid entraining gas.

The treatment liquid recovery unit 42 is disposed above the connection part of the return flow path 18 in the absorber 12. Therefore, the mist-like or vaporous treatment liquid flowing into the absorber 12 through the return flow path 18 and entrained in the gas or the mist-like or vaporous treatment liquid generated from the treatment liquid in the absorber 12 and entrained in the gas comes into contact with the second phase portion in a liquid form introduced through the extraction path 44. As a result, the mist-like or vaporous amine is taken into the second phase portion.

The absorber 12 is also provided with a water washing unit 46 that brings the treatment liquid entraining gas and the washing water into contact with each other to recover the treatment liquid having failed to be recovered by the treatment liquid recovery unit 42 of the treatment liquid entrained in the treatment liquid entraining gas. Since not only the amine but also the organic solvent as the second component is entrained in the treatment liquid entraining gas, the water washing unit 46 brings the mist-like or vaporous organic solvent and amine that have passed through the treatment liquid recovery unit 42 into contact with washing water to recover the organic solvent and the amine. Note that the water washing unit 46 can be omitted.

The water washing unit 46 and the treatment liquid recovery unit 42 are positioned such that the treatment liquid entraining gas after coming into contact with the second phase portion in the treatment liquid recovery unit 42 comes into contact with washing water in the water washing unit 46. Therefore, in FIG. 1, the water washing unit 46 is disposed on the upper side of the treatment liquid recovery unit 42. With such positioning, even if the water washing unit 46 is provided, the amount of washing water to be supplied can be reduced, so that dilution of the treatment liquid can be suppressed.

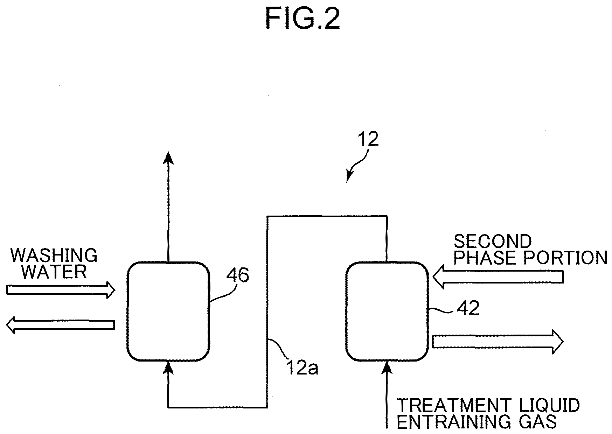

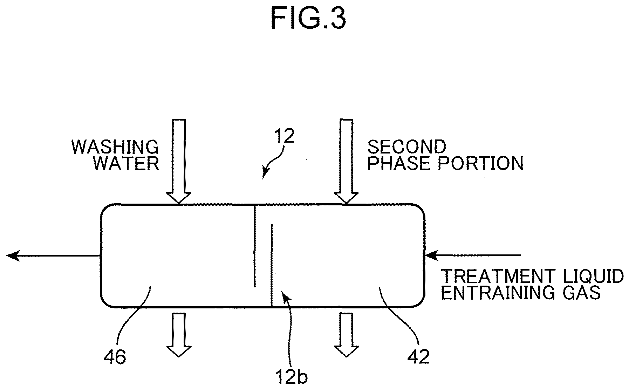

If the water washing unit 46 allows the treatment liquid entraining gas having passed through the treatment liquid recovery unit 42 to come into contact with washing water, the water washing unit 46 does not need to be disposed on the upper side of the treatment liquid recovery unit 42. For example, as illustrated in FIG. 2, in the absorber 12, the treatment liquid recovery unit 42 and the water washing unit 46 may be arranged side by side in the horizontal direction, and a flow path 12a may be formed through which the treatment liquid entraining gas having passed through the treatment liquid recovery unit 42 from the bottom to the top is introduced into a lower portion of the water washing unit 46. As illustrated in FIG. 3, the absorber 12 may be configured such that the treatment liquid entraining gas flows horizontally through the treatment liquid recovery unit 42 and the water washing unit 46, and the absorber 12 may be provided with, between the treatment liquid recovery unit 42 and the water washing unit 46, a meandering flow path portion 12b designed not to allow the first phase portion or the second phase portion introduced into the treatment liquid recovery unit 42 to flow into the water washing unit 46. Instead of providing the meandering flow path portion 12b, the absorber 12 may be divided into a container portion having the treatment liquid recovery unit 42 and a container portion having the water washing unit 46.

Here, a gas treatment method using the gas treatment apparatus 10 according to the first embodiment will be described. The gas treatment method includes an absorption step and a regeneration step.

The absorption step is a step of bringing the gas to be treated and the treatment liquid into contact with each other in the absorber 12. The gas to be treated such as a process gas containing at least carbon dioxide is supplied to the absorber 12 through the introduction path 22. Additionally, to the absorber 12 is introduced the treatment liquid through the return flow path 18. The treatment liquid comes in contact with carbon dioxide contained in the gas to be treated and absorbs the carbon dioxide. The treatment liquid having absorbed carbon dioxide (rich liquid) phase-separates into a first phase portion having a higher content of carbon dioxide and a second phase portion having a lower content of carbon dioxide.

The treatment liquid in the absorber 12 is introduced into the separator 26 through the feed flow path 16. From the separator 26, a treatment liquid mainly containing an amine (first phase portion) is led out through the first flow path portion 16a, and a treatment liquid mainly containing a second component (organic solvent) (second phase portion) is led out through the second flow path portion 16b. The first phase portion and the second phase portion merge together, and are heated through heat exchange with the treatment liquid (lean liquid) flowing through the return flow path 18 in the heat exchanger 32. The treatment liquid having passed through the heat exchanger 32 is introduced into the regenerator 14.

The treatment liquid introduced into the regenerator 14 is heated by the heater 36, whereby carbon dioxide is separated from the treatment liquid (regeneration step). The carbon dioxide separated from the treatment liquid is sent to a demand destination through the supply path 38. Water vapor obtained from the treatment liquid in the regenerator 14 is condensed by the condenser 40 in the supply path 38 and is usually returned to the regenerator 14. The water vapor may be returned to the absorber 12.

The treatment liquid (lean liquid) stored in the regenerator 14 flows through the return flow path 18 and returns to the absorber 12. The treatment liquid in the return flow path 18 heats, in the heat exchanger 32, the treatment liquid flowing through the feed flow path 16.

A part of the second phase portion flowing through the second flow path portion 16b of the feed flow path 16 is sent to the treatment liquid recovery unit 42 provided in the absorber 12 through the extraction path 44. In the treatment liquid recovery unit 42, the second phase portion introduced through the extraction path 44 comes into contact with the treatment liquid entraining gas generated from the treatment liquid in the absorber 12. The treatment liquid entraining gas entrains a mist-like or vaporous treatment liquid. As a result, since the mist-like or vaporous amine is taken into the liquid second phase portion, the amine is recovered from the treatment liquid entraining gas in the absorber 12, and the amine can be merged with a liquid treatment liquid.

In the treatment liquid recovery unit 42, a part of the introduced second phase portion is entrained in the treatment liquid entraining gas in some occasions, and the treatment liquid entraining gas comes into contact with washing water in the water washing unit 46. Therefore, the second phase portion entrained is taken into the washing water.

As described above, in the gas treatment apparatus 10 of the present embodiment, the second phase portion for recovery having flowed out of the absorber 12 and the treatment liquid entraining gas come into contact with each other in the treatment liquid recovery unit 42. At this time, since the second phase portion mainly containing the second component is brought into contact with the treatment liquid entraining gas, the second component in the second phase portion is easily mixed with the amine entrained in the treatment liquid entraining gas. Therefore, the amine entrained in the treatment liquid entraining gas can be recovered. In addition, water washing with washing water is also used, but since the amount of the washing water can be reduced, dilution of the treatment liquid can be suppressed. Therefore, it is possible to suppress deterioration of the separation and recovery performance of an acidic compound via the treatment liquid.

In the present embodiment, the separator 26 is provided, and the second phase portion of the treatment liquid separated by the separator 26 is introduced into the treatment liquid recovery unit 42. Therefore, the amine entrained in the treatment liquid entraining gas can be effectively recovered.

In the present embodiment, since the second phase portion is used for contact with the treatment liquid entraining gas in the treatment liquid recovery unit 42, a part of the second phase portion is to be entrained in the treatment liquid entraining gas. Thereafter, the treatment liquid entraining gas comes into contact with washing water in the water washing unit 46. Therefore, the second phase portion entrained in the treatment liquid entraining gas is recovered. Therefore, in the treatment liquid recovery unit 42, the treatment liquid entrained in the treatment liquid entraining gas can be recovered, and the second phase portion used in the treatment liquid recovery unit 42, the second phase portion being one to be entrained in the treatment liquid entraining gas, can also be recovered.

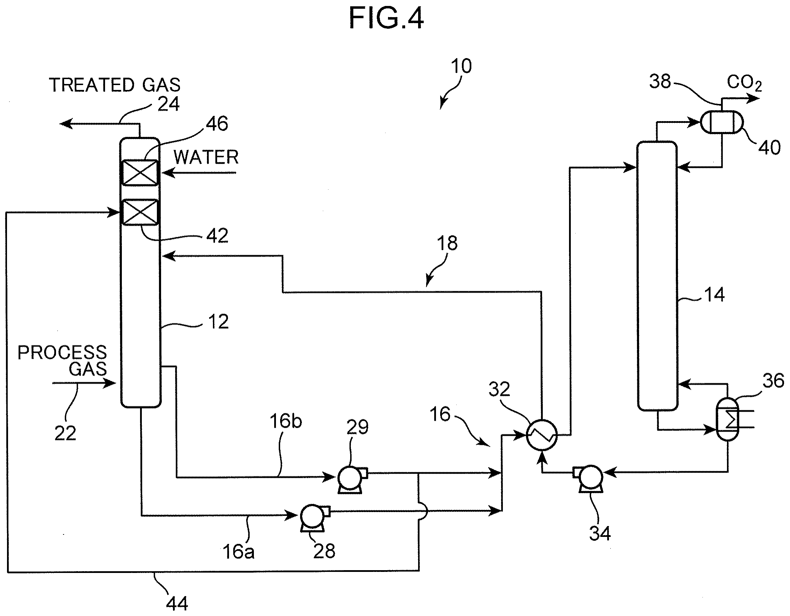

The separator 26 is provided in the present embodiment, but the separator 26 can be omitted. For example, as illustrated in FIG. 4, the feed flow path 16 may include a first flow path portion 16a and a second flow path portion 16b, and the first flow path portion 16a and the second flow path portion 16b each may be connected to the absorber 12. In this case, the first flow path portion 16a is connected to the lower end of the absorber 12, and the second flow path portion 16b is connected to the absorber 12 at a position higher than the connection part of the first flow path portion 16a. That is, the treatment liquid accumulated in the absorber 12 is phase-separated into the first phase portion and the second phase portion. The first phase portion mainly containing an amine is heavier than the second phase portion mainly containing a second component (organic solvent). Therefore, the treatment liquid accumulated in the absorber 12 differs in the composition ratio between the first phase portion and the second phase portion depending on the position in the vertical direction. Therefore, the treatment liquid can be separated into the first phase portion and the second phase portion by making the position where the treatment liquid is extracted by the first flow path portion 16a and the position where the treatment liquid is extracted by the second flow path portion 16b different in the height direction.

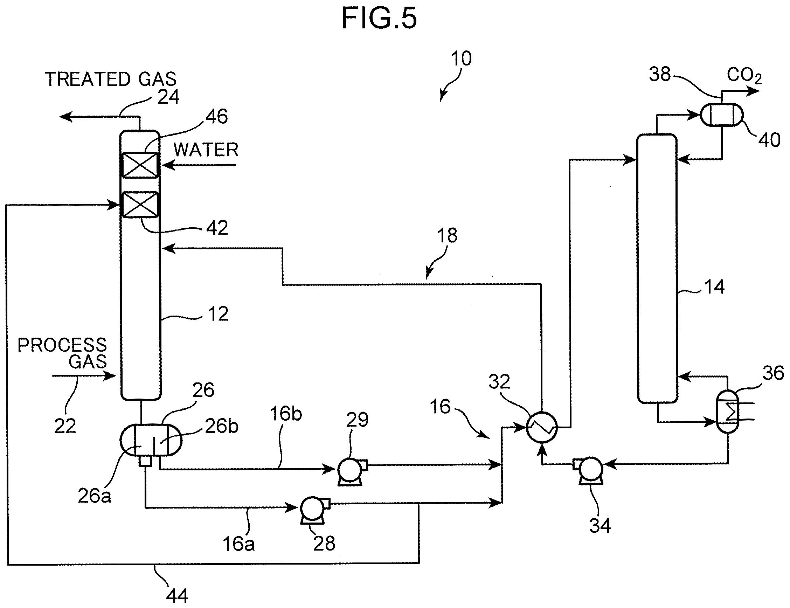

In the present embodiment, the second phase portion flowing through the second flow path portion 16b is introduced into the treatment liquid recovery unit 42, but the present embodiment is not limited to this configuration. As illustrated in FIG. 5, the first phase portion flowing through the first flow path portion 16a may be introduced into the treatment liquid recovery unit 42. In this case, the extraction path 44 is connected not to the second flow path portion 16b but to the first flow path portion 16a. The first phase portion introduced into the treatment liquid recovery unit 42 through the extraction path 44 comes into contact with the mist-like or vaporous treatment liquid entrained in the treatment liquid entraining gas. At this time, since the first phase portion takes in the second component in the mist-like or vaporous treatment liquid, the second component can be recovered from the treatment liquid entraining gas.

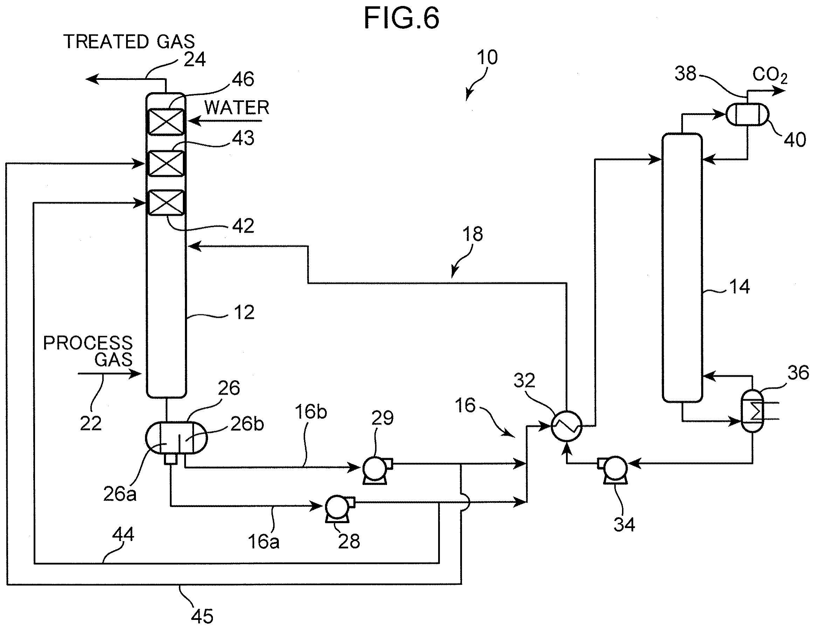

As illustrated in FIG. 6, in addition to the extraction path 44 for introducing the first phase portion flowing through the first flow path portion 16a into the treatment liquid recovery unit 42, a second extraction path 45 for introducing the second phase portion flowing through the second flow path portion 16b into a second treatment liquid recovery unit 43 may be provided. The second treatment liquid recovery unit 43 brings the second phase portion mainly containing the second component (organic solvent) into contact with the treatment liquid entraining gas in the absorber 12 to mainly recover the amine.

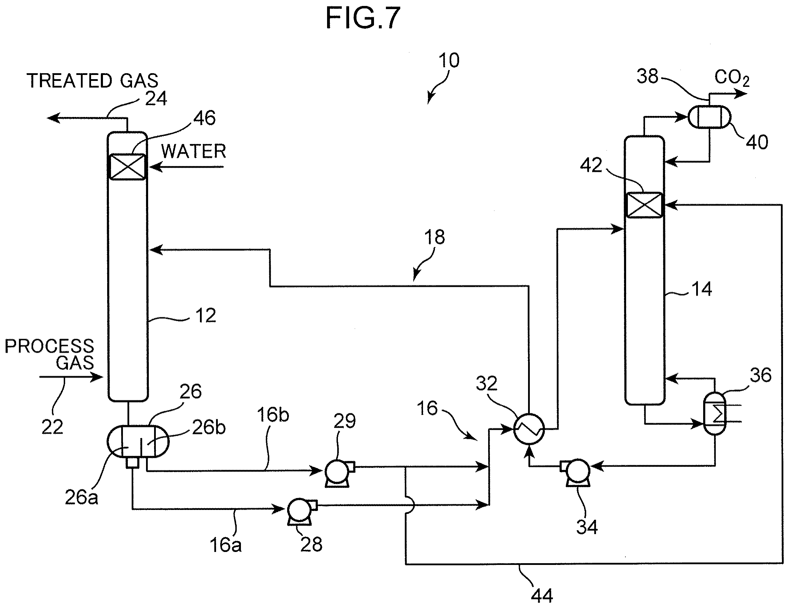

As illustrated in FIG. 7, the treatment liquid recovery unit 42 may be provided in the regenerator 14. In this case, the treatment liquid recovery unit 42 is disposed at a position above the connection part of the feed flow path 16 in the regenerator 14. In FIG. 7, the second phase portion is supplied to the treatment liquid recovery unit 42 through the extraction path 44 connected to the second flow path portion 16b, but alternatively/additionally, the first phase portion may be supplied to the treatment liquid recovery unit 42 through the extraction path 44 connected to the first flow path portion 16a.

(Second Embodiment)

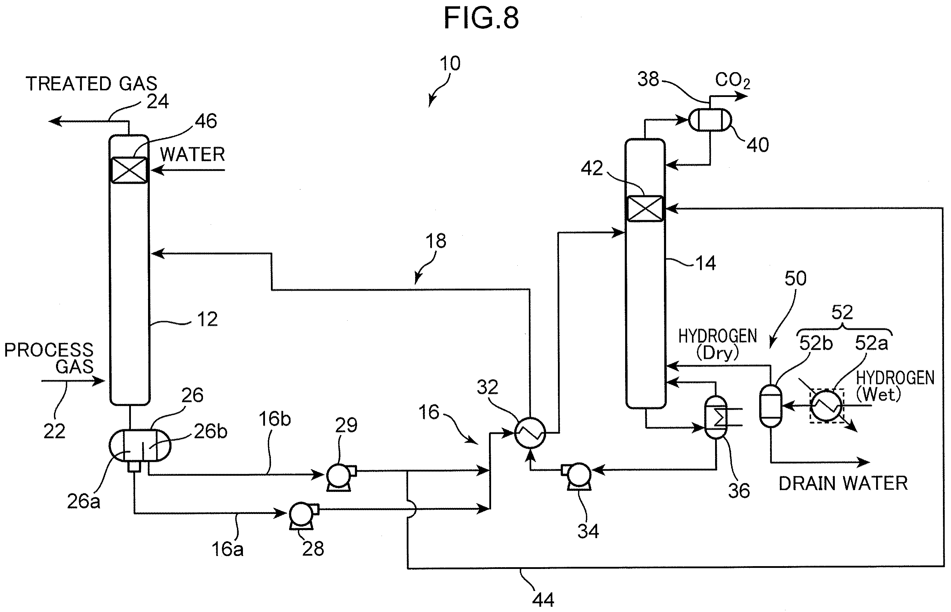

As illustrated in FIG. 8, in a second embodiment, a gas for promoting separation of the acidic compound from the treatment liquid (hereinafter referred to as a separation promoting gas) is introduced into the regenerator 14. Note that, here, the same constituent elements as those of the first embodiment are denoted by the same reference numerals, and detailed description thereof will be omitted.

A gas treatment apparatus 10 according to the second embodiment is provided with a separation promoting gas supply unit 50, which supplies a separation promoting gas to the regenerator 14. The separation promoting gas is a gas that is hardly dissolved in the treatment liquid. That is, the separation promoting gas is hardly absorbed by the treatment liquid. In addition, the separation promoting gas does not cause a chemical reaction with the treatment liquid. That is, the separation promoting gas is a gas having no reactivity with the treatment liquid. Examples of the separation promoting gas include hydrogen gas, oxygen gas, and hydrocarbon gases such as methane gas, and in the present embodiment, hydrogen gas is used. Examples of the separation promoting gas include water vapor or a mixed gas of water vapor and a gas that is hardly dissolved in the treatment liquid. By supplying the gas that is hardly dissolved in the treatment liquid, water vapor, or a mixed gas of water vapor and the gas that is hardly dissolved in the treatment liquid to the regenerator 14, the gas partial pressure of the acidic compound in the regenerator 14 can be reduced, and the separation of the acidic compound from the treatment liquid can be promoted in the regenerator 14.

Here, "hardly dissolved" in the treatment liquid may indicate that the solubility in the treatment liquid is a predetermined value or less. The separation promoting gas may be, for example, a gas that follows Henry's law and has a solubility of 1 mol or less in 100 g of the treatment liquid under the conditions of 0°C and 100 kPa. The solubility of oxygen in water is $1.3 \times 10^{-4}$ mol/100 g, the solubility of methane in water is $8 \times 10^{-4}$ mol/100 g, and the solubility of hydrogen in water is $9.5 \times 10^{-5}$ mol/100 g. On the other hand, since the solubility of ammonia in water is 6 mol/100 g, ammonia does not correspond to the separation promoting gas.

The gas treatment apparatus 10 includes a moisture removing unit 52 that removes moisture from hydrogen gas. That is, when hydrogen gas as the separation promoting gas is obtained by water electrolysis, moisture close to saturation may be retained in the hydrogen gas. Therefore, the moisture removing unit 52 is provided so that the moisture retained in the hydrogen gas is not introduced into the regenerator 14 to thin the treatment liquid.

The moisture removing unit 52 includes a cooler 52a that cools the hydrogen gas to separate moisture from the hydrogen gas, and a gas-liquid separator 52b that accumulates the separated water obtained in the cooler 52a. The separated water accumulated in the gas-liquid separator 52b is discharged to the outside of the system.

The moisture removing unit 52 is not limited to have the configuration of separating moisture by cooling hydrogen gas. For example, the moisture removing unit 52 may be configured to remove moisture by causing an adsorbent to adsorb moisture.

In addition, in a case where moisture is not retained in the separation promoting gas, such as a case where a dried separation promoting gas is supplied, the moisture removing unit 52 can be omitted.

Since the separation promoting gas is supplied to the regenerator 14, the amount of gas in the regenerator 14 is increased as compared with the first embodiment. Further, a mist-like or vaporous treatment liquid may be entrained in the gas in the regenerator 14 (the gas separated from the treatment liquid and containing carbon dioxide). The gas entraining the treatment liquid is referred to as a treatment liquid entraining gas. In the present embodiment, the treatment liquid recovery unit 42 is provided in the regenerator 14 to recover a mist-like or vaporous treatment liquid entrained or contained in the treatment liquid entraining gas in the regenerator 14.

The treatment liquid recovery unit 42 is disposed at a position above the connection part of the feed flow path 16 in the regenerator 14. That is, to prevent the treatment liquid introduced from the feed flow path 16 from passing through the treatment liquid recovery unit 42, the treatment liquid recovery unit 42 is located above the connection part of the feed flow path 16.

As illustrated in FIG. 8, the second phase portion may be introduced into the treatment liquid recovery unit 42 from the second flow path portion 16b, or although not illustrated, the first phase portion may be introduced into the treatment liquid recovery unit 42 from the first flow path portion 16a.

In the present embodiment, regeneration temperature can be lowered by supplying the separation promoting gas to the regenerator 14. Therefore, heat with a lower temperature (or low quality) can be used.

In the present embodiment, since the separation promoting gas is supplied to the regenerator 14 by the separation promoting gas supply unit 50, the amount of gas in the regenerator 14 is increased. Along with this, the amount of the treatment liquid entrained in the treatment liquid entraining gas also increases. However, since the second phase portion for recovery having flowed out of the absorber 12 is introduced into the regenerator 14, even if the amount of the treatment liquid entrained in the treatment liquid entraining gas increases in the regenerator 14, the treatment liquid entrained can be effectively recovered.

In addition, in the present embodiment, moisture is removed from the separation promoting gas, which is hydrogen gas containing moisture, in the moisture removing unit 52. Therefore, not only the regeneration temperature can be lowered, but also dilution of the treatment liquid by the separation promoting gas can be suppressed.

In the present embodiment, an extraction path 44 is connected to the second flow path portion 16b through which the second phase portion mainly flows. Alternatively, the extraction path 44 may be connected to the first flow path portion 16a through which the first phase portion mainly flows. In addition to the extraction path 44 for introducing the first phase portion flowing through the first flow path portion 16a into the treatment liquid recovery unit 42, a second extraction path 45 for introducing the second phase portion flowing through the second flow path portion 16b into the second treatment liquid recovery unit 43 as illustrated in FIG. 6 may be provided. In this case, the second treatment liquid recovery unit 43 may be provided in the regenerator 14. Although the treatment liquid recovery unit 42 is provided in the regenerator 14, the treatment liquid recovery unit 42 may be provided in the absorber 12 instead of/in addition to the regenerator 14 as illustrated in FIGS. 1, 5, and 6. Similarly to FIG. 4, the separator 26 may be omitted. Although other configurations, operations, and effects are not described, the description of the first embodiment can be applied to the second embodiment.

(Third Embodiment)

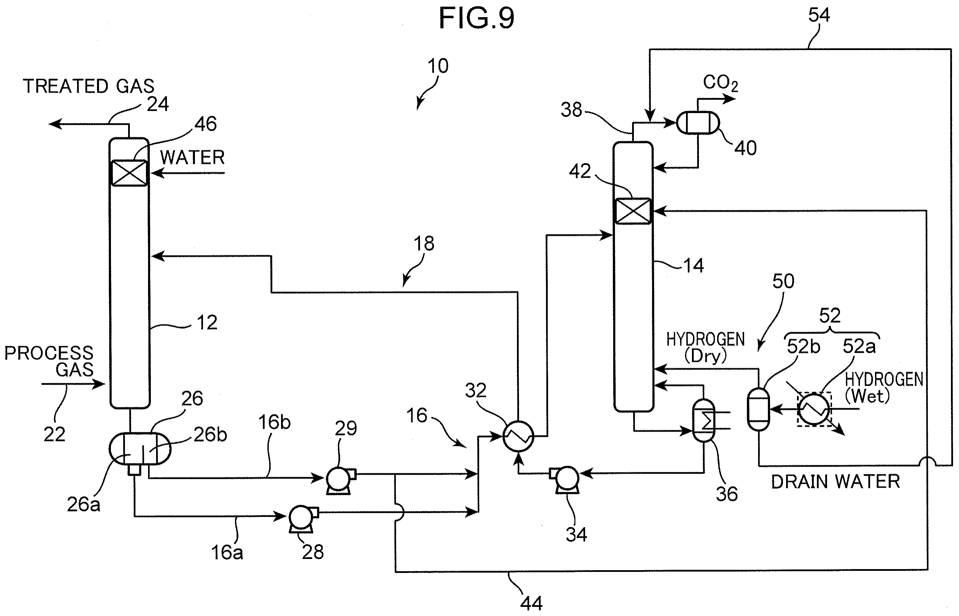

As illustrated in FIG. 9, in a third embodiment, moisture obtained by the moisture removing unit 52 is used for washing the treatment liquid entraining gas. Note that, here, the same constituent elements as those of the first embodiment are denoted by the same reference numerals, and detailed description thereof will be omitted.

A gas treatment apparatus 10 according to the third embodiment is provided with a moisture supply path 54 for supplying moisture obtained by the moisture removing unit 52 to the condenser 40. One end of the moisture supply path 54 is connected to the gas-liquid separator 52b, and the other end is connected to a part of the supply path 38 on the upstream side of the condenser 40. The other end may be connected to the condenser 40.

The separated water accumulated in the gas-liquid separator 52b is sent to the supply path 38 through the moisture supply path 54. Therefore, even if the treatment liquid entraining gas in the regenerator 14 flows into the supply path 38, the treatment liquid entrained in the treatment liquid entraining gas is taken into the separated water, and thus is returned to the regenerator 14 via the condenser 40.

In the present embodiment, the moisture obtained in the moisture removing unit 52 is supplied to the condenser 40 provided in the supply path 38 through the moisture supply path 54. In the condenser 40, the treatment liquid entrained in the treatment liquid entraining gas flowing out of the regenerator 14 is recovered. That is, the moisture obtained by the moisture removing unit 52 is utilized for recovery of the treatment liquid entrained in the treatment liquid entraining gas. Therefore, the moisture separated by the moisture removing unit 52 can be effectively utilized.

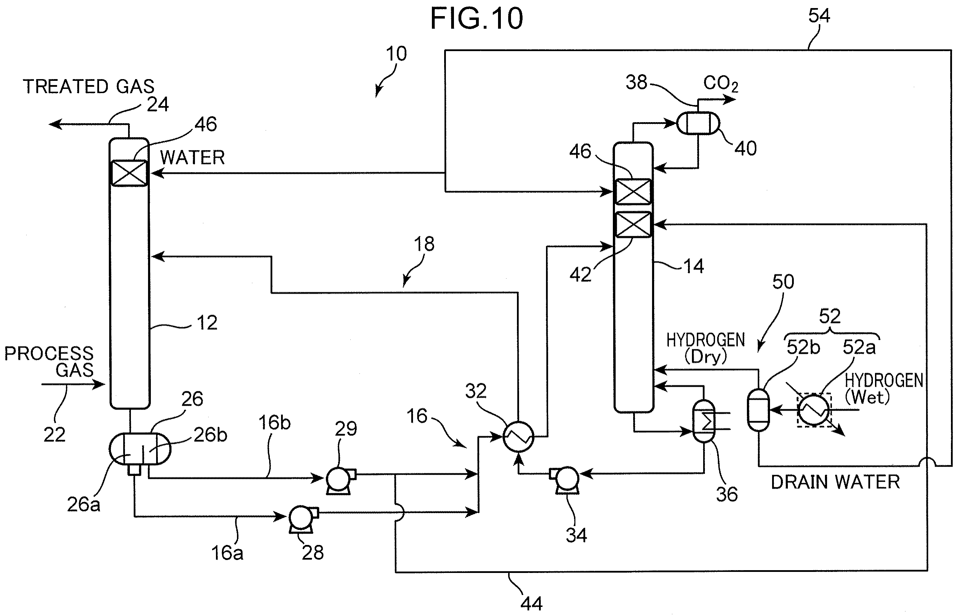

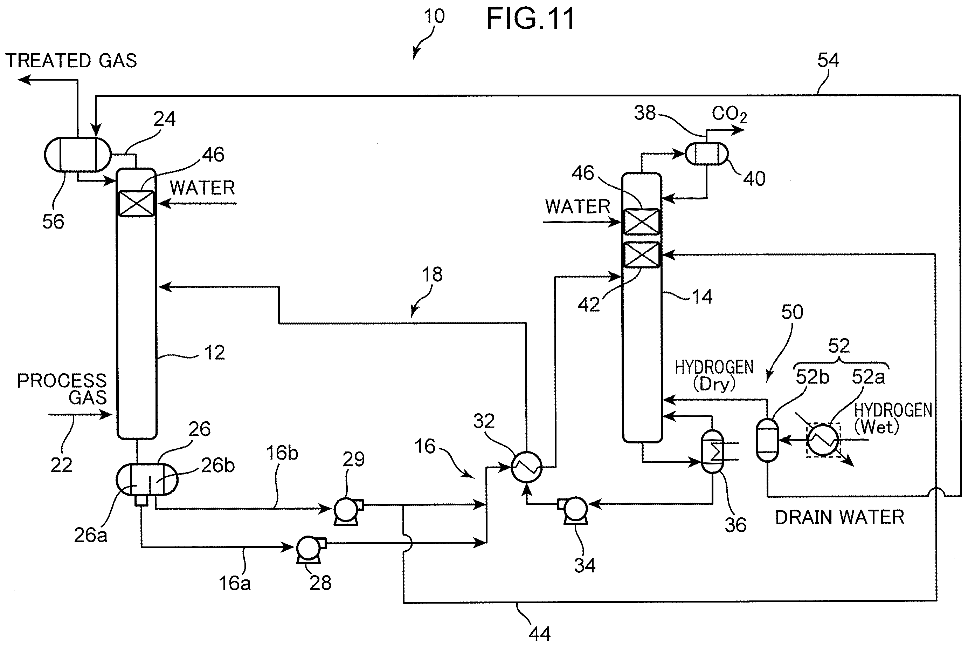

In the present embodiment, the moisture supply path 54 is connected to the supply path 38, but the present embodiment is not limited thereto. As illustrated in FIG. 10, the moisture supply path 54 may supply moisture to at least one of the water washing unit 46 provided in the absorber 12 and the water washing unit 46 provided in the regenerator 14. As illustrated in FIG. 11, the moisture supply path 54 may supply moisture to a condenser 56 provided in the discharge path 24. In this case, the water washing unit 46 may be provided in the absorber 12 or may be omitted.

In the present embodiment, the extraction path 44 is connected to the second flow path portion 16b through which the second phase portion mainly flows. Alternatively, the extraction path 44 may be connected to the first flow path portion 16a through which the first phase portion mainly flows. In addition to the extraction path 44 for introducing the first phase portion flowing through the first flow path portion 16a into the treatment liquid recovery unit 42, the second extraction path 45 for introducing the second phase portion flowing through the second flow path portion 16b into the second treatment liquid recovery unit 43 may be provided. Although the treatment liquid recovery unit 42 is provided in the regenerator 14, the treatment liquid recovery unit 42 may be provided in the absorber 12 instead of/in addition to the regenerator 14 as illustrated in FIGS. 1, 5, and 6. Similarly to FIG. 4, the separator 26 may be omitted. Although other configurations, operations, and effects are not described, the description of the first and second embodiments can be applied to the third embodiment.

(Fourth Embodiment)

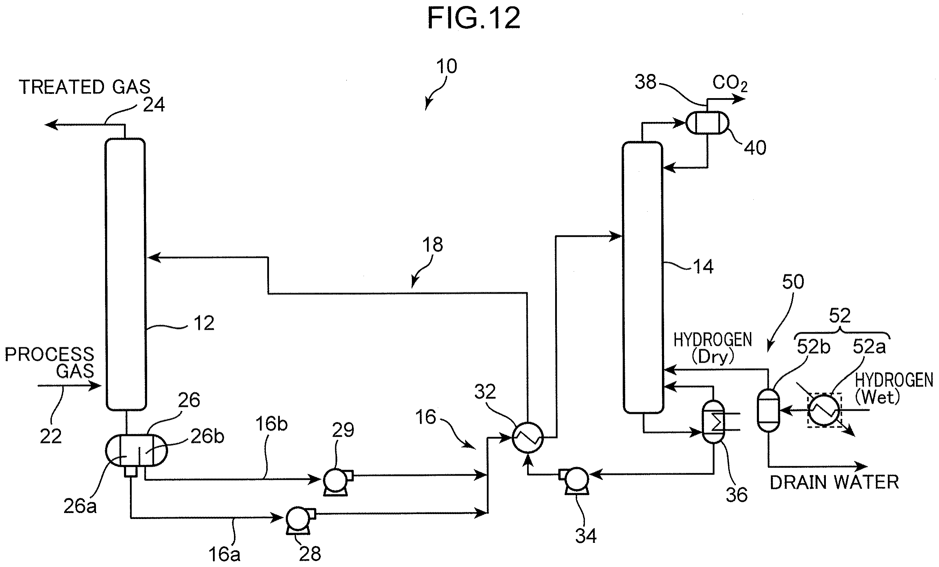

As illustrated in FIG. 12, in the fourth embodiment, the separation promoting gas supply unit 50 and the moisture removing unit 52 are provided, but no treatment liquid recovery unit 42 is provided. That is, in the fourth embodiment, since the separation promoting gas supply unit 50 supplies the separation promoting gas including a gas containing moisture or water vapor to the regenerator 14, there is a possibility that moisture is carried into the regenerator 14 by the separation promoting gas. Then, such a possibility can be suppressed and the treatment liquid can be suppressed from being diluted by the moisture removing unit 52. Therefore, the treatment liquid recovery unit 42 that recovers, by the first phase portion or the second phase portion of the treatment liquid, the treatment liquid entrained in the treatment liquid entraining gas is omitted. Note that, here, the same constituent elements as those of the first and second embodiments are denoted by the same reference numerals, and detailed description thereof will be omitted.

In the fourth embodiment, regeneration temperature can be lowered by supplying the separation promoting gas to the regenerator 14. Therefore, heat with a lower temperature (or lower quality) can be used. Moreover, in the moisture removing unit 52, moisture is removed from the separation promoting gas which is a gas containing moisture or a gas composed of water vapor, and then the separation promoting gas is supplied to the regenerator 14. Therefore, dilution of the treatment liquid by the separation promoting gas can be suppressed. Therefore, it is possible to suppress deterioration of the separation and recovery performance of the acidic compound via the treatment liquid.

In FIG. 12, the separator 26 is provided in the feed flow path 16, and the feed flow path 16 has the first flow path portion 16a and the second flow path portion 16b, but the present embodiment is not limited thereto. The separator 26 may be omitted, and the feed flow path 16 may be configured by a single flow path without including the first flow path portion 16a and the second flow path portion 16b. Although other configurations, operations, and effects are not described, the description of the first and second embodiments can be applied to the fourth embodiment.

(Fifth Embodiment)

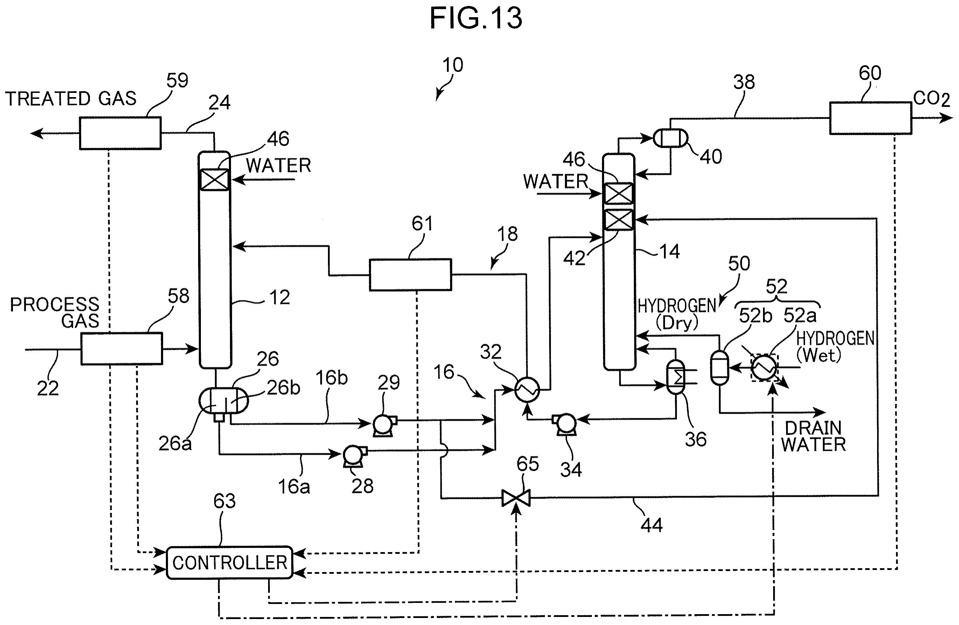

FIG. 13 illustrates a fifth embodiment. Note that, here, the same constituent elements as those of the first to fourth embodiments are denoted by the same reference numerals, and detailed description thereof will be omitted.

In the fifth embodiment, in the event that the mist-like or vaporous treatment liquid entrained in the treatment liquid entraining gas increases or is expected to increase through the measurement of the concentration or the like of the gas to be treated, the treatment liquid is recovered from the treatment liquid entraining gas, whereas in other events, the treatment liquid is not recovered. In this way, the energy required for recovering the treatment liquid is prevented from excessively increasing.

Specifically, the gas treatment apparatus 10 is provided with at least one of a measuring device 58 that is disposed on the introduction path 22 and is capable of measuring the concentration of sulfur contained in the gas to be treated or the flow rate of the gas to be treated, a measuring device 59 that is disposed on the discharge path 24 and is capable of measuring the concentration of the amine or the second component contained in the treated gas, a measuring device 60 that is disposed on the supply path 38 and is capable of measuring the concentration of the amine or the second component contained in the gas containing carbon dioxide, and a measuring device 61 that is disposed on the return flow path 18 and is capable of measuring the concentration of a degradation component contained in the treatment liquid.

Signals indicating the measurement results detected by the measuring devices 58 to 61 are transmitted to the controller 63. The controller 63 is configured to adjust at least one of a valve 65 provided on the extraction path 44 and the cooler 52a on the basis of the measurement results indicated by the received signals. For example, when the measurement result detected by the measuring device 58 disposed on the introduction path 22 indicates that the gas to be treated contains sulfur in an amount equal to or more than the threshold value, the controller 63 may perform control to open the valve 65 or control to activate the cooler 52a. This is because when the content of sulfur is large, the mist generation of the amine may be promoted. In addition, when the measurement result detected by the measuring device 58 disposed on the introduction path 22 indicates that the flow rate of the gas to be treated is equal to or more than the threshold value, the controller 63 may perform control to open the valve 65 or control to activate the cooler 52a. This is because it is predicted that the discharge amount of the amine or the second component can be increased if the flow rate of the gas to be treated increases. In addition, when the measurement result detected by the measuring device 59 disposed on the discharge path 24 indicates that the treated gas contains the amine or the second component having a concentration equal to or more than the threshold value, the controller 63 may perform control to open the valve 65 or control to activate the cooler 52a. This is because it is indicated that the discharge of the amine or the second component has actually increased. In addition, when the measurement result detected by the measuring device 61 disposed on the return flow path 18 indicates that the degradation component which foams the amine in the treatment liquid is contained in a concentration equal to or more than the threshold value, the controller 63 may perform control to open the valve 65 or control to activate the cooler 52a. This is because when the degradation component has increased due to aged degradation of the treatment liquid, the amine in the treatment liquid is likely to be lost.

In the fifth embodiment, when the evaporation amount or the mist amount of the treatment liquid is large, or when the evaporation amount or the mist amount of the treatment liquid is expected to be large, the vapor or mist of the treatment liquid can be appropriately recovered. On the other hand, when the evaporation amount or the mist amount of the treatment liquid is small or is expected to be small, the energy required for recovering the treatment liquid can be reduced.

In addition, when the measurement result detected by at least one of the measuring device 59 disposed in the discharge path 24 and the measuring device 60 disposed in the supply path 38 indicates that the concentration of the amine or the second component contained in the gas is higher than the threshold value, the controller 63 may perform at least one of control to increase the degree of opening of the valve 65 and control to increase the capacity of the cooler 52a. On the other hand, when the measurement result detected by at least one of the measuring device 59 disposed in the discharge path 24 and the measuring device 60 disposed in the supply path 38 indicates that the concentration of the amine or the second component contained in the gas is lower than the threshold value, the controller 63 may perform at least one of control to decrease the degree of opening of the valve 65 and control to decrease the capacity of the cooler 52a.

In this case, when the evaporation amount or the mist amount of the treatment liquid is larger, the vapor or mist of the treatment liquid can be appropriately recovered. On the other hand, when the evaporation amount or the mist amount of the treatment liquid is smaller, the energy required for moisture removal can be reduced by reducing the moisture removal amount.

In the aspect illustrated in FIG. 13, the water washing unit 46 is provided, but the water washing unit 46 can be omitted. That is, if the second component (or organic solvent) is hardly volatilized, the water washing unit 46 can be omitted. Even in this case, the controller 63 is configured to adjust at least one of the valve 65 and the cooler 52a on the basis of the measurement results indicated by the received signals. The treatment liquid recovery unit 42 may be provided in the absorber 12 instead of/in addition to the regenerator 14. Although other configurations, operations, and effects are not described, the description of the first to fourth embodiments can be applied to the fifth embodiment.

(Sixth Embodiment)

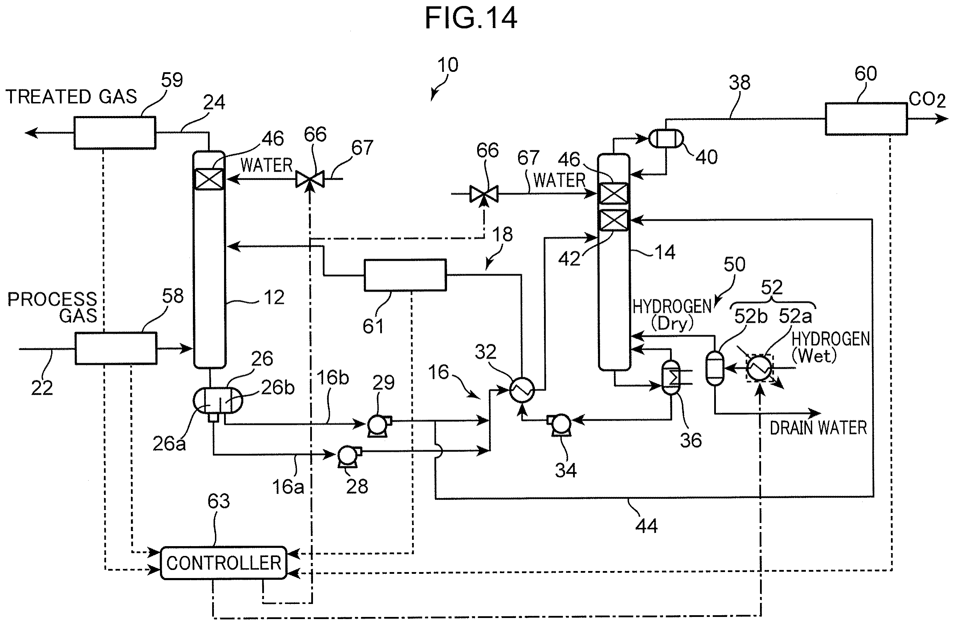

FIG. 14 illustrates a sixth embodiment. Note that, here, the same constituent elements as those of the first to fifth embodiments are denoted by the same reference numerals, and detailed description thereof will be omitted.

In the sixth embodiment, the controller 63 not only adjusts at least one of the valve 65 provided on the extraction path 44 and the cooler 52a but also adjusts a valve 66 provided on a washing water path 67 for supplying washing water to a water washing unit 46. The valve 65 of the extraction path 44 may be omitted. The washing water path 67 may be constituted of a moisture supply path 54.

When the measurement result detected by at least one of the measuring device 59 disposed on the discharge path 24 and the measuring device 60 disposed on the supply path 38 indicates that the concentration of the amine or the second component contained in the gas is higher than the threshold value, the controller 63 performs at least one of control to increase the degree of opening of the valve 66 provided on the washing water path 67 and control to increase the capacity of the cooler 52a. On the other hand, when the measurement result detected by at least one of the measuring device 59 disposed on the discharge path 24 and the measuring device 60 disposed on the supply path 38 indicates that the concentration of the amine or the second component contained in the gas is lower than the threshold value, the controller 63 performs at least one of control to decrease the degree of opening of the valve 66 on the washing water path 67 and control to decrease the capacity of the cooler 52a.

In the sixth embodiment, when the evaporation amount or the mist amount of the treatment liquid is large, the vapor or mist of the treatment liquid can be appropriately recovered.

Note that, although other configurations, operations, and effects are not described, the description of the first to fifth embodiments can be applied to the sixth embodiment.

(Seventh Embodiment)

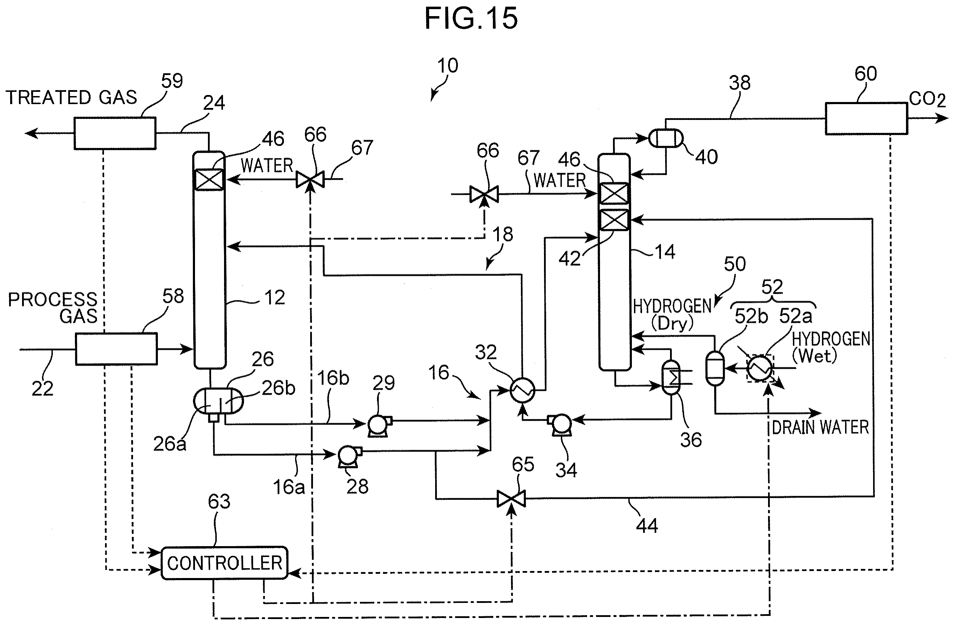

FIG. 15 illustrates a seventh embodiment. Note that, here, the same constituent elements as those of the first embodiment are denoted by the same reference numerals, and detailed description thereof will be omitted.

In the seventh embodiment, the controller 63 is configured to adjust at least one of the valve 65 provided on the extraction path 44, the valve 66 provided on the washing water path 67, and the cooler 52a on the basis of the measurement results indicated by the received signals. That is, while the flow rate of the water supplied to the water washing unit 46 is configured not to be adjusted in the fifth embodiment, the amount of the water supplied to the water washing unit 46 also is configured to be adjustable in the seventh embodiment. As a result, the amount of the water to be supplied to the absorber 12 or the regenerator 14 can be more appropriately adjusted. In FIG. 15, the measuring device 61 disposed on the return flow path 18 is omitted, but the measuring device 61 may be provided on the return flow path 18.

Note that, although other configurations, operations, and effects are not described, the description of the first to sixth embodiments can be applied to the seventh embodiment.

(Other Embodiments)

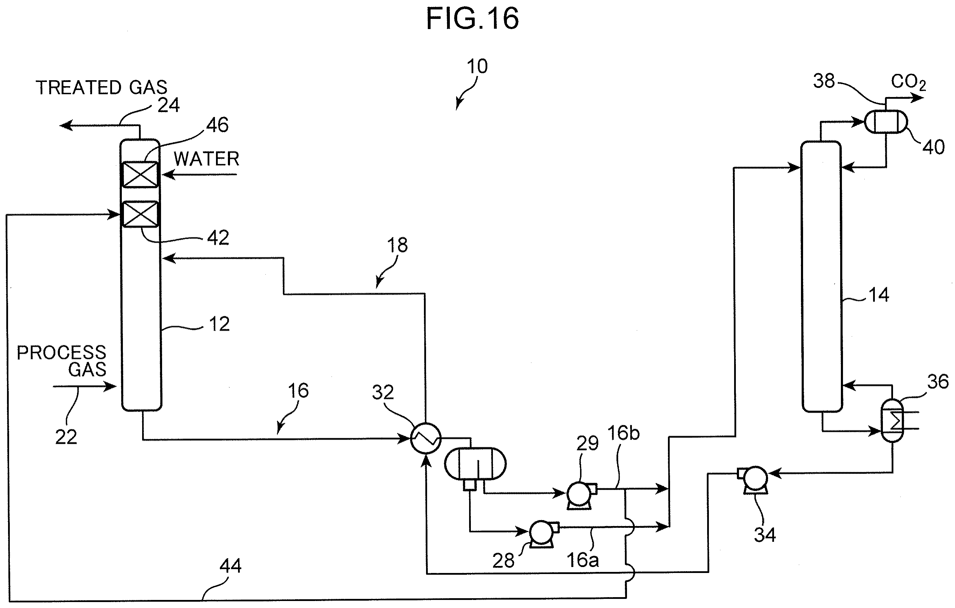

It should be understood that the embodiments disclosed herein are illustrative in all respects and are not restrictive. The present invention is not limited to the above embodiment, and various changes, improvements, and the like can be made without departing from the gist of the present invention. For example, in the first to seventh embodiments, the feed flow path 16 includes the first flow path portion 16a and the second flow path portion 16b disposed at parts upstream of the heat exchanger 32, but the present embodiment is not limited thereto. As illustrated in FIG. 16, the first flow path portion 16a and the second flow path portion 16b may be provided in a part of the feed flow path 16 on the downstream side of the heat exchanger 32. In this case, the first phase portion or the second phase portion to be supplied to the treatment liquid recovery unit 42 becomes a liquid heated by the heat exchanger 32. Therefore, as illustrated in FIG. 1 and the like, to further enhance the effect of recovering the treatment liquid, it is preferable to supply the first phase portion or the second phase portion before being heated by the heat exchanger 32 to the treatment liquid recovery unit 42.

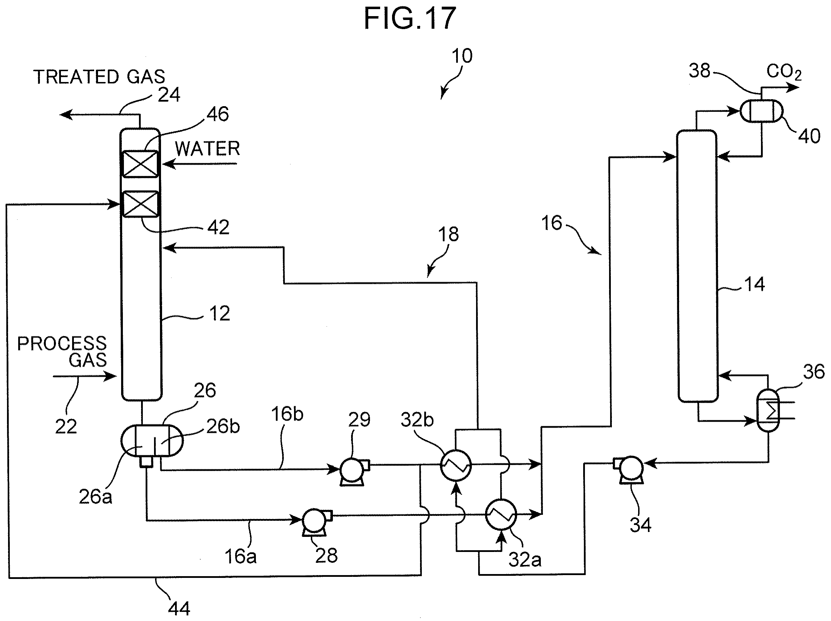

As illustrated in FIG. 17, each of the first flow path portion 16a and the second flow path portion 16b may be provided with the heat exchanger 32. That is, a heat exchanger 32a that exchanges heat between the first phase portion of the rich liquid and the lean liquid and a heat exchanger 32b that exchanges heat between the second phase portion of the rich liquid and the lean liquid may be provided. While FIG. 17 illustrates a configuration in which the heat exchanger 32a and the heat exchanger 32b are connected in parallel, the heat exchanger 32a and the heat exchanger 32b may be connected in series. However, the heat recovery efficiency is higher when the heat exchanger 32a and the heat exchanger 32b are connected in parallel.

Here, the above embodiments will be outlined.

(1) A gas treatment apparatus according to the above embodiment includes: an absorber that brings a gas to be treated containing an acidic compound that generates an acid through dissolution in water and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; a regenerator that heats the treatment liquid having absorbed the acidic compound to separate the acidic compound from the treatment liquid; and a treatment liquid recovery unit that brings at least one of the first phase portion and the second phase portion, both having flowed out of the absorber, into contact with a treatment liquid entraining gas to recover the treatment liquid entrained in the treatment liquid entraining gas, the treatment liquid entraining gas being either a gas in the absorber after the acidic compound is absorbed from the gas to be treated into the treatment liquid or a gas in the regenerator and containing the acidic compound.

In the gas treatment apparatus, at least one of the first phase portion and the second phase portion both flowing out of the absorber comes into contact with the treatment liquid entraining gas in the treatment liquid recovery unit. At this time, when the first phase portion mainly containing the amine is brought into contact with the treatment liquid entraining gas, the amine in the first phase portion is easily mixed with the second component entrained in the treatment liquid entraining gas. Therefore, the second component entrained in the treatment liquid entraining gas can be recovered. On the other hand, when the second phase portion mainly containing the second component is brought into contact with the treatment liquid entraining gas, the second component in the second phase portion is easily mixed with the amine entrained in the treatment liquid entraining gas. Therefore, the amine entrained in the treatment liquid entraining gas can be recovered. At this time, if a washing water for washing the treatment liquid entrained in the treatment liquid entraining gas is not used, the treatment liquid is not diluted. In addition, even if water washing with washing water is also employed, since the amount of the washing water can be reduced, dilution of the treatment liquid can be suppressed. Therefore, it is possible to suppress deterioration of the separation and recovery performance of an acidic compound via the treatment liquid.

(2) The gas treatment apparatus may include a separator that separates the treatment liquid having absorbed the acidic compound into a treatment liquid mainly containing the first phase portion and a treatment liquid mainly containing the second phase portion.

In this aspect, the treatment liquid separated by the separator (namely, the treatment liquid separated into the treatment liquid mainly containing the first phase portion and the treatment liquid mainly containing the second phase portion) comes into contact with the treatment liquid entraining gas in the treatment liquid recovery unit. Therefore, the treatment liquid entrained in the treatment liquid entraining gas can be effectively recovered.

(3) The gas treatment apparatus may include a water washing unit that brings the treatment liquid entraining gas and washing water into contact with each other to recover the treatment liquid entrained in the treatment liquid entraining gas. In this case, the treatment liquid recovery unit may be disposed at a position where the treatment liquid phase-separated into the first phase portion and the second phase portion comes into contact with the treatment liquid entraining gas before coming into contact with the washing water in the water washing unit.

In this aspect, since at least one of the first phase portion and the second phase portion is used for contact with the treatment liquid entraining gas in the treatment liquid recovery unit, a part of at least one of the first phase portion and the second phase portion is to be entrained in the treatment liquid entraining gas. Thereafter, the treatment liquid entraining gas comes into contact with washing water in the water washing unit. Therefore, at least one of the first phase portion and the second phase portion entrained in the treatment liquid entraining gas is recovered. Therefore, in the treatment liquid recovery unit, the treatment liquid entrained in the treatment liquid entraining gas can be recovered, and at least one of the first phase portion and the second phase portion used in the treatment liquid recovery unit, the at least one of the first phase portion and the second phase portion being one to be entrained in the treatment liquid entraining gas, can also be recovered.

(4) The gas treatment apparatus may include a separation promoting gas supply unit that supplies a separation promoting gas for promoting separation of the acidic compound from the treatment liquid to the regenerator. In this case, the treatment liquid recovery unit is configured to bring at least one of the first phase portion and the second phase portion, both having flowed out of the absorber, into contact with the treatment liquid entraining gas.

In this aspect, regeneration temperature can be lowered because the separation promoting gas is supplied to the regenerator. Therefore, heat with a lower temperature (low quality) can be used.

(5) In the gas treatment apparatus, the treatment liquid recovery unit may be configured to bring at least one of the first phase portion and the second phase portion, both having flowed out of the absorber, into contact with a gas containing the acidic compound in the regenerator.

In this aspect, since the separation promoting gas is supplied to the regenerator by the separation promoting gas supply unit, the amount of gas in the regenerator is increased. Along with this, the amount of the treatment liquid entrained in the treatment liquid entraining gas also increases. However, since at least one of the first phase portion and the second phase portion, both having flowed out of the absorber, is introduced into the regenerator, even if the amount of the treatment liquid entrained in the treatment liquid entraining gas increases in the regenerator, the treatment liquid entrained can be effectively recovered.

(6) In the gas treatment apparatus, the separation promoting gas may be a gas containing moisture or a gas composed of water vapor. In this case, the gas treatment apparatus may include a moisture removing unit that separates the moisture contained in the separation promoting gas from the separation promoting gas to be supplied to the regenerator.

In this aspect, moisture is removed from the separation promoting gas, which is a gas containing moisture or a gas composed of water vapor, in the moisture removing unit. Therefore, not only the regeneration temperature can be lowered, but also dilution of the treatment liquid by the separation promoting gas can be suppressed.

(7) In the gas treatment apparatus, the separation promoting gas may be a gas containing moisture or a gas composed of water vapor. In this case, the gas treatment apparatus may include: a moisture removing unit that separates the moisture contained in the separation promoting gas from the separation promoting gas to be supplied to the regenerator; and a moisture supply path for supplying the moisture obtained in the moisture removing unit to at least one of: a water washing unit in the absorber; a water washing unit in the regenerator; a condenser provided on a supply path through which the acidic compound obtained in the regenerator is supplied to a supply destination; and a condenser provided on a discharge path through which a gas after treatment is discharged from the absorber.

In this aspect, the moisture obtained in the moisture removing unit is supplied to at least one of the water washing unit of the absorber, the water washing unit of the regenerator, the condenser provided in the supply path, and the condenser provided in the discharge path, through the moisture supply path. Then, at least one of the treatment liquid entrained in the gas in the regenerator and the treatment liquid entrained in the gas after treatment discharged from the absorber is recovered in the water washing unit or the condenser. That is, the moisture obtained by the moisture removing unit is utilized for recovery of the treatment liquid entrained in the treatment liquid entraining gas. Therefore, the moisture separated by the moisture removing unit can be effectively utilized.

(8) A gas treatment apparatus according to the preceding embodiment includes: an absorber that brings a gas to be treated containing an acidic compound that generates an acid through dissolution in water and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; a regenerator that heats the treatment liquid having absorbed the acidic compound to separate the acidic compound from the treatment liquid; a separation promoting gas supply unit that supplies a separation promoting gas that is a gas which promotes separation of the acidic compound from the treatment liquid and that is a gas containing moisture or is composed of water vapor to the regenerator; and a moisture removing unit that removes the moisture contained in the separation promoting gas from the separation promoting gas to be supplied to the regenerator.

In the gas treatment apparatus, regeneration temperature can be lowered by supplying the separation promoting gas to the regenerator. Therefore, heat with a lower temperature (or lower quality) can be used. Moreover, in the moisture removing unit, moisture is removed from the separation promoting gas which is a gas containing moisture or a gas composed of water vapor, and then the gas is supplied to the regenerator. Therefore, dilution of the treatment liquid by the separation promoting gas can be suppressed. Therefore, it is possible to suppress deterioration of the separation and recovery performance of an acidic compound via the treatment liquid.

(9) A gas treatment method according to the above embodiment includes: in an absorber, bringing a gas to be treated containing an acidic compound that generates an acid through dissolution in water and a treatment liquid into contact with each other to make the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound; in a regenerator, heating the treatment liquid having absorbed the acidic compound to separate the acidic compound from the treatment liquid; causing the first phase portion and the second phase portion to flow out of the absorber; and bringing at least one of the first phase portion and the second phase portion, both having flowed out of the absorber, into contact with a treatment liquid entraining gas to recover the treatment liquid entrained in the treatment liquid entraining gas, the treatment liquid entraining gas being either a gas in the absorber after the acidic compound is absorbed from the gas to be treated into the treatment liquid or a gas in the regenerator and containing the acidic compound.

In the gas treatment method, at least one of the first phase portion and the second phase portion, both having flowed out of the absorber, comes into contact with the treatment liquid entraining gas in the absorber or the regenerator. At this time, when the first phase portion mainly containing the amine comes into contact with the treatment liquid entraining gas, the amine in the first phase portion is easily mixed with the second component entrained in the treatment liquid entraining gas. Therefore, the second component entrained in the treatment liquid entraining gas can be recovered. On the other hand, when the second phase portion mainly containing the second component comes into contact with the treatment liquid entraining gas, the second component in the second phase portion is easily mixed with the amine entrained in the treatment liquid entraining gas. Therefore, the amine entrained in the treatment liquid entraining gas can be recovered. At this time, if the washing water for washing the treatment liquid entrained in the treatment liquid entraining gas is not used, the treatment liquid is not diluted. In addition, even if water washing with washing water is also employed, since the amount of the washing water can be reduced, dilution of the treatment liquid can be suppressed. Therefore, it is possible to suppress deterioration of the separation and recovery performance of an acidic compound via the treatment liquid.

(10) The gas treatment method may further include separating the treatment liquid having absorbed the acidic compound into a treatment liquid mainly containing the first phase portion and a treatment liquid mainly containing the second phase portion by a separator.

In this aspect, at least one of the treatment liquids separated by the separator (namely, the treatment liquid mainly containing the first phase portion and the treatment liquid mainly containing the second phase portion) comes into contact with the treatment liquid entraining gas. That is, the treatment liquid mainly containing the first phase portion or the second phase portion is used for contact with the treatment liquid entraining gas. Therefore, the treatment liquid entrained in the treatment liquid entraining gas can be effectively recovered.

(11) In the gas treatment method, recovering the treatment liquid may include bringing an absorption liquid phase-separated into the first phase portion and the second phase portion into contact with the treatment liquid entraining gas. The gas treatment method may further include thereafter bringing the gas in the absorber or the gas in the regenerator into contact with washing water to recover a treatment liquid entrained in the gas to be treated.

In this aspect, since at least one of the first phase portion and the second phase portion is used for contact with the treatment liquid entraining gas, a part of at least one of the first phase portion and the second phase portion may be entrained in the treatment liquid entraining gas. Since the treatment liquid entraining gas thereafter comes into contact with washing water, at least one of the first phase portion and the second phase portion each entrained in the treatment liquid entraining gas is recovered. Therefore, it is also possible to recover a part of at least one of the first phase portion and the second phase portion used for contact with the treatment liquid entraining gas, the at least one of the first phase portion and the second phase portion being one to be entrained in the treatment liquid entraining gas.

(12) The gas treatment method may further include supplying, to the regenerator, a separation promoting gas that promotes separation of the acidic compound from the treatment liquid. In this case, the recovery of the treatment liquid may include bringing at least one of the first phase portion and the second phase portion, both having flowed out of the absorber, into contact with the treatment liquid entraining gas.

In this aspect, the energy required for separating the acidic compound from the treatment liquid can be reduced by supplying the separation promoting gas to the regenerator.

(13) In the gas treatment method, the recovery of the treatment liquid may include bringing at least one of the first phase portion and the second phase portion, both having flowed out of the absorber, into contact with a gas containing the acidic compound in the regenerator.

In this aspect, since the separation promoting gas is supplied to the regenerator by the separation promoting gas supply unit, the amount of gas in the regenerator is increased. Along with this, the amount of the treatment liquid entrained in the treatment liquid entraining gas also increases. However, since at least one of the first phase portion and the second phase portion, both having flowed out of the absorber, is introduced into the regenerator, even if the amount of the treatment liquid entrained in the treatment liquid entraining gas increases in the regenerator, the treatment liquid entrained can be effectively recovered.

(14) In the gas treatment method, the separation promoting gas may be a gas containing moisture or a gas composed of water vapor. In this case, the gas treatment method may further includes: separating moisture contained in the separation promoting gas from the separation promoting gas to be supplied to the regenerator; and bringing the separated moisture into contact with the treatment liquid entraining gas to recover the treatment liquid entrained in the treatment liquid entraining gas.

In this aspect, moisture is removed from the separation promoting gas which is a gas containing moisture or a gas composed of water vapor, and then the gas is supplied to the regenerator. Therefore, not only the regeneration temperature can be lowered, but also dilution of the treatment liquid by the separation promoting gas can be suppressed.

On the other hand, the separated moisture is utilized for recovery of the treatment liquid entrained in the treatment liquid entraining gas by contact with the treatment liquid entraining gas. Therefore, the separated moisture can be effectively utilized.

(15) The gas treatment method may further include: separating moisture contained in the separation promoting gas from the separation promoting gas to be supplied to the regenerator; and supplying the separated moisture to at least one of a water washing unit in the absorber, a water washing unit in the regenerator, a condenser provided on a supply path through which an acidic compound obtained in the regenerator is supplied to a supply destination, and a condenser provided on a discharge path through which a gas to be treated after treatment is discharged from the absorber.

In this aspect, the separated moisture is supplied to at least one of the water washing unit of the absorber, the water washing unit of the regenerator, the condenser provided in the supply path, and the condenser provided in the discharge path. Then, at least one of the treatment liquid entrained in the acidic compound obtained in the regenerator and the treatment liquid entrained in the gas to be treated after treatment discharged from the absorber is recovered in the condenser. Therefore, the separated moisture can be effectively utilized.

(16) The gas treatment method may further include: measuring at least one of a concentration of a sulfur contained in the gas to be treated to be introduced into the absorber, a flow rate of the gas to be treated to be introduced into the absorber, a concentration of the amine or the second component contained in the gas after treatment discharged from the absorber, a concentration of the amine or the second component contained in the gas containing the acidic compound discharged from the regenerator, and a concentration of a degradation component contained in the treatment liquid to be introduced into the absorber; and adjusting at least one flow rate among a flow rate of moisture separated from the separation promoting gas and to be brought into contact with the treatment liquid entraining gas, a flow rate of the first phase portion or the second phase portion to be brought into contact with the treatment liquid entraining gas, and a flow rate of washing water to be supplied to a water washing unit provided in at least one of the absorber and the regenerator, on a basis of a result of the measurement.

In this aspect, when the evaporation amount or the mist amount of the treatment liquid is large, or when the evaporation amount or the mist amount of the treatment liquid is expected to be large, the vapor or mist of the treatment liquid can be appropriately recovered.

(17) In the gas treatment method, the adjusting the at least one flow rate may include: when a measurement result of at least one of a concentration of the amine or the second component contained in the gas after treatment discharged from the absorber and a concentration of the amine or the second component contained in the gas containing the acidic compound discharged from the regenerator becomes higher than a threshold value, increasing at least one of a flow rate of moisture separated from the separation promoting gas and to be brought into contact with the treatment liquid entraining gas and a flow rate of washing water to be supplied to the water washing unit; and when a measurement result of at least one of a concentration of the amine or the second component contained in the gas after treatment discharged from the absorber and a concentration of the amine or the second component contained in the gas containing the acidic compound discharged from the regenerator becomes lower than a threshold value, reducing at least one of a flow rate of moisture separated from the separation promoting gas and to be brought into contact with the treatment liquid entraining gas and a flow rate of washing water to be supplied to the water washing unit.

In this aspect, when the evaporation amount or the mist amount of the treatment liquid is large, the vapor or mist of the treatment liquid can be appropriately recovered. On the other hand, when the evaporation amount or the mist amount of the treatment liquid is small, the energy required for moisture removal can be reduced by reducing the moisture removal amount.

(18) The gas treatment method may include: measuring at least one of a concentration of a sulfur contained in the gas to be treated to be introduced into the absorber, a flow rate of the gas to be treated to be introduced into the absorber, a concentration of the amine or the second component contained in the gas after treatment discharged from the absorber, a concentration of the amine or the second component contained in the gas containing the acidic compound discharged from the regenerator, and a concentration of a degradation component contained in the treatment liquid to be introduced into the absorber; and adjusting at least one flow rate of a flow rate of moisture separated from the separation promoting gas and to be brought into contact with the treatment liquid entraining gas and a flow rate of the first phase portion or the second phase portion to be brought into contact with the treatment liquid entraining gas, on a basis of a result of the measurement.

In this aspect, when the evaporation amount or the mist amount of the treatment liquid is large, or when the evaporation amount or the mist amount of the treatment liquid is expected to be large, the vapor or mist of the treatment liquid can be appropriately recovered.

(19) A gas treatment method according to the preceding embodiment includes: in an absorber, bringing a gas to be treated containing an acidic compound that generates an acid through dissolution in water and a treatment liquid into contact with each other to make the treatment liquid absorb the acidic compound contained in the gas to be treated, the treatment liquid phase-separating into a first phase portion mainly containing an amine phase and a second phase portion mainly containing a component phase other than an amine through absorption of the acidic compound; in a regenerator, heating the treatment liquid having absorbed the acidic compound to separate the acidic compound from the treatment liquid; removing the moisture contained in a separation promoting gas from the separation promoting gas that has almost no solubility in or reactivity with the treatment liquid and is a gas which contains moisture or is composed of water vapor; and supplying the separation promoting gas from which the moisture has been removed to the regenerator.

In the gas treatment method, regeneration temperature can be lowered by supplying the separation promoting gas to the regenerator. Therefore, heat with a lower temperature (or lower quality) can be used. In addition, moisture is removed from the separation promoting gas which is a gas containing moisture or a gas composed of water vapor, and then the gas is supplied to the regenerator. Therefore, dilution of the treatment liquid by the separation promoting gas can be suppressed. Therefore, it is possible to suppress deterioration of the separation and recovery performance of an acidic compound via the treatment liquid.

As described above, it is possible to suppress dilution of a treatment liquid with water in a gas treatment apparatus or a gas treatment method for separating an acidic compound from a gas to be treated using a treatment liquid containing an amine.

This application is based on Japanese Patent Application No. 2023-110796 filed on July 5, 2023, the contents of which are incorporated herein by reference.

Although the present invention is appropriately and sufficiently described through the embodiments with reference to the above drawings to express the present invention, it should be recognized that a person skilled in the art can easily modify and/or improve the above-described embodiments. Therefore, unless a change or improvement made by a person skilled in the art is at a level departing from the scope of rights of the claims described in claims, the change or improvement is interpreted to be included in the scope of rights of the claims.

**Claims**

1.  A gas treatment apparatus comprising:

    an absorber that brings a gas to be treated containing an acidic compound that generates an acid through dissolution in water and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound;
    a regenerator that heats the treatment liquid having absorbed the acidic compound to separate the acidic compound from the treatment liquid; and
    a treatment liquid recovery unit that brings at least one of the first phase portion and the second phase portion, both having flowed out of the absorber, into contact with a treatment liquid entraining gas to recover the treatment liquid entrained in the treatment liquid entraining gas, the treatment liquid entraining gas being either a gas in the absorber after the acidic compound is absorbed from the gas to be treated into the treatment liquid or a gas in the regenerator and containing the acidic compound.

2.  The gas treatment apparatus according to claim 1, comprising a separator that separates the treatment liquid having absorbed the acidic compound into a treatment liquid mainly containing the first phase portion and a treatment liquid mainly containing the second phase portion.

3.  The gas treatment apparatus according to claim 1, comprising a water washing unit that brings the treatment liquid entraining gas and washing water into contact with each other to recover the treatment liquid entrained in the treatment liquid entraining gas,
    wherein the treatment liquid recovery unit is disposed at a position where the treatment liquid phase-separated into the first phase portion and the second phase portion comes into contact with the treatment liquid entraining gas before coming into contact with the washing water in the water washing unit.

4.  The gas treatment apparatus according to claim 1 or 2, comprising a separation promoting gas supply unit that supplies a separation promoting gas for promoting separation of the acidic compound from the treatment liquid to the regenerator,
    wherein the treatment liquid recovery unit is configured to bring at least one of the first phase portion and the second phase portion, both having flowed out of the absorber, into contact with the treatment liquid entraining gas.

5.  The gas treatment apparatus according to claim 4, wherein the treatment liquid recovery unit is configured to bring at least one of the first phase portion and the second phase portion, both having flowed out of the absorber, into contact with a gas containing the acidic compound in the regenerator.

6. The gas treatment apparatus according to claim 4, wherein

the separation promoting gas is a gas containing moisture or a gas composed of water vapor, and
the gas treatment apparatus comprises a moisture removing unit that separates the moisture contained in the separation promoting gas from the separation promoting gas to be supplied to the regenerator.

7. The gas treatment apparatus according to claim 4, wherein

the separation promoting gas is a gas containing moisture or a gas composed of water vapor, and
the gas treatment apparatus comprises:

a moisture removing unit that separates the moisture contained in the separation promoting gas from the separation promoting gas to be supplied to the regenerator; and
a moisture supply path for supplying the moisture obtained in the moisture removing unit to at least one of:

a water washing unit in the absorber;
a water washing unit in the regenerator;
a condenser provided on a supply path through which the acidic compound obtained in the regenerator is supplied to a supply destination; and
a condenser provided on a discharge path through which a gas after treatment is discharged from the absorber.

8. A gas treatment apparatus comprising:

an absorber that brings a gas to be treated containing an acidic compound that generates an acid through dissolution in water and a treatment liquid into contact with each other for making the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound;
a regenerator that heats the treatment liquid having absorbed the acidic compound to separate the acidic compound from the treatment liquid;
a separation promoting gas supply unit that supplies a separation promoting gas that is a gas which promotes separation of the acidic compound from the treatment liquid and that is a gas containing moisture or is composed of water vapor to the regenerator; and
a moisture removing unit that removes the moisture contained in the separation promoting gas from the separation promoting gas to be supplied to the regenerator.

9. A gas treatment method comprising:

in an absorber, bringing a gas to be treated containing an acidic compound that generates an acid through dissolution in water and a treatment liquid into contact with each other to make the treatment liquid absorb the acidic compound contained in the gas to be treated, the treatment liquid being in a state where an amine and a second component are mixed with each other in a state before absorbing the acidic compound, and the treatment liquid phase-separating into a first phase portion mainly containing the amine and a second phase portion mainly containing the second component through absorption of the acidic compound;
in a regenerator, heating the treatment liquid having absorbed the acidic compound to separate the acidic compound from the treatment liquid;
causing the first phase portion and the second phase portion to flow out of the absorber; and
bringing at least one of the first phase portion and the second phase portion, both having flowed out of the absorber, into contact with a treatment liquid entraining gas to recover the treatment liquid entrained in the treatment liquid entraining gas, the treatment liquid entraining gas being either a gas in the absorber after the acidic compound is absorbed from the gas to be treated into the treatment liquid or a gas in the regenerator and containing the acidic compound.

**10.** The gas treatment method according to claim 9, further comprising separating the treatment liquid having absorbed the acidic compound into a treatment liquid mainly containing the first phase portion and a treatment liquid mainly containing the second phase portion by a separator.

**11.** The gas treatment method according to claim 9 or 10, wherein

the recovering the treatment liquid includes bringing an absorption liquid phase-separated into the first phase portion and the second phase portion into contact with the treatment liquid entraining gas, and
the gas treatment method further comprises:
thereafter bringing the gas in the absorber or the gas in the regenerator into contact with washing water to recover a treatment liquid entrained in the gas to be treated.

**12.** The gas treatment method according to claim 9 or 10, further comprising

supplying, to the regenerator, a separation promoting gas that promotes separation of the acidic compound from the treatment liquid,
wherein the recovery of the treatment liquid includes bringing at least one of the first phase portion and the second phase portion, both having flowed out of the absorber, into contact with the treatment liquid entraining gas.

**13.** The gas treatment method according to claim 12, wherein the recovery of the treatment liquid includes bringing at least one of the first phase portion and the second phase portion, both having flowed out of the absorber, into contact with a gas containing the acidic compound in the regenerator.

**14.** The gas treatment method according to claim 12, wherein

the separation promoting gas is a gas containing moisture or a gas composed of water vapor, and
the gas treatment method further comprises:

separating moisture contained in the separation promoting gas from the separation promoting gas to be supplied to the regenerator; and
bringing the separated moisture into contact with the treatment liquid entraining gas to recover the treatment liquid entrained in the treatment liquid entraining gas.

**15.** The gas treatment method according to claim 12, further comprising:

separating moisture contained in the separation promoting gas from the separation promoting gas to be supplied to the regenerator; and
supplying the separated moisture to at least one of a water washing unit in the absorber, a water washing unit in the regenerator, a condenser provided on a supply path through which an acidic compound obtained in the regenerator is supplied to a supply destination, and a condenser provided on a discharge path through which a gas to be treated after treatment is discharged from the absorber.

**16.** The gas treatment method according to claim 14, further comprising:

measuring at least one of a concentration of a sulfur contained in the gas to be treated to be introduced into the absorber, a flow rate of the gas to be treated to be introduced into the absorber, a concentration of the amine or the second component contained in the gas after treatment discharged from the absorber, a concentration of the amine or the second component contained in the gas containing the acidic compound discharged from the regenerator, and a concentration of a degradation component contained in the treatment liquid to be introduced into the absorber; and
adjusting at least one flow rate among a flow rate of moisture separated from the separation promoting gas and to be brought into contact with the treatment liquid entraining gas, a flow rate of the first phase portion or the second phase portion to be brought into contact with the treatment liquid entraining gas, and a flow rate of washing water to be supplied to a water washing unit provided in at least one of the absorber and the regenerator, on a basis of a result of the measurement.

**17.** The gas treatment method according to claim 16, wherein
the adjusting the at least one flow rate includes:

when a measurement result of at least one of a concentration of the amine or the second component contained in the gas after treatment discharged from the absorber and a concentration of the amine or the second component contained in the gas containing the acidic compound discharged from the regenerator becomes higher than a threshold value, increasing at least one of a flow rate of moisture separated from the separation promoting gas and to be brought into contact with the treatment liquid entraining gas and a flow rate of washing water to be supplied to the water washing unit; and

when a measurement result of at least one of a concentration of the amine or the second component contained in the gas after treatment discharged from the absorber and a concentration of the amine or the second component contained in the gas containing the acidic compound discharged from the regenerator becomes lower than a threshold value, reducing at least one of a flow rate of moisture separated from the separation promoting gas and to be brought into contact with the treatment liquid entraining gas and a flow rate of washing water to be supplied to the water washing unit.

18. The gas treatment method according to claim 12, further comprising:

measuring at least one of a concentration of a sulfur contained in the gas to be treated to be introduced into the absorber, a flow rate of the gas to be treated to be introduced into the absorber, a concentration of the amine or the second component contained in the gas after treatment discharged from the absorber, a concentration of the amine or the second component contained in the gas containing the acidic compound discharged from the regenerator, and a concentration of a degradation component contained in the treatment liquid to be introduced into the absorber; and

adjusting at least one flow rate of a flow rate of moisture separated from the separation promoting gas and to be brought into contact with the treatment liquid entraining gas and a flow rate of the first phase portion or the second phase portion to be brought into contact with the treatment liquid entraining gas, on a basis of a result of the measurement.

19. A gas treatment method comprising:

in an absorber, bringing a gas to be treated containing an acidic compound that generates an acid through dissolution in water and a treatment liquid into contact with each other to make the treatment liquid absorb the acidic compound contained in the gas to be treated, the treatment liquid phase-separating into a first phase portion mainly containing an amine phase and a second phase portion mainly containing a component phase other than an amine through absorption of the acidic compound;

in a regenerator, heating the treatment liquid having absorbed the acidic compound to separate the acidic compound from the treatment liquid;

removing moisture contained in a separation promoting gas from the separation promoting gas that promotes separation of the acidic compound from the treatment liquid; and

supplying the separation promoting gas from which the moisture has been removed to the regenerator.

FIG.1

# FIG.2

WASHING WATER

SECOND PHASE PORTION

46

42

12

12a

TREATMENT LIQUID ENTRAINING GAS

# FIG.3

WASHING WATER

12

SECOND PHASE PORTION

TREATMENT LIQUID ENTRAINING GAS

46

42

12b

FIG.4

# FIG.5

EP 4 741 042 A1

FIG.6

FIG.7

EP 4 741 042 A1

FIG.8

# FIG.9

EP 4 741 042 A1

FIG.10

FIG.11

FIG.12

EP 4 741 042 A1

FIG.13

FIG.14

## FIG.15

EP 4 741 042 A1

FIG.16

10

PROCESS GAS 22

TREATED GAS 24

WATER 46

CO₂

40

38

14

36

34

29 16b

16a

28

32

18

16

12

42

44

FIG.17

## INTERNATIONAL SEARCH REPORT

| International application No. |
| --- |
| **PCT/JP2024/014059** |

### A.  CLASSIFICATION OF SUBJECT MATTER

***B01D 53/14***(2006.01)i; ***B01D 53/62***(2006.01)i; ***B01D 53/78***(2006.01)i
FI:   B01D53/14 210; B01D53/14 220; B01D53/78; B01D53/62 ZAB

According to International Patent Classification (IPC) or to both national classification and IPC

### B.  FIELDS SEARCHED

Minimum documentation searched (classification system followed by classification symbols)

B01D53/14-53/18,53/34-53/85,53/92,53/96

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
| --- | --- | --- |
| A | JP 2019-98226 A (KABUSHIKI KAISHA KOBE SEIKO SHO) 24 June 2019 (2019-06-24) entire text, all drawings | 1-19 |
| A | WO 2016/144179 A1 (NEDERLANDSE ORGANISATIE VOOR TOEGEPAST-NATUURWETENSCHAPPELIJK ONDERZOEK TNO) 15 September 2016 (2016-09-15) entire text, all drawings | 1-19 |
| A | JP 2018-187553 A (KABUSHIKI KAISHA KOBE SEIKO SHO) 29 November 2018 (2018-11-29) entire text, all drawings | 1-19 |
| A | JP 2015-508709 A (BASF SE) 23 March 2015 (2015-03-23) entire text, all drawings | 1-19 |
| A | JP 2017-39105 A (KABUSHIKI KAISHA KOBE SEIKO SHO) 23 February 2017 (2017-02-23) entire text, all drawings | 1-19 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 June 2024** | **02 July 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/014059** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2021-7938 A (THE NATIONAL INSTITUTE OF ADVANCED INDUSTRIAL SCIENCE AND TECHNOLOGY) 28 January 2021 (2021-01-28)<br>entire text, all drawings | 1-19 |

Form PCT/ISA/210 (second sheet) (July 2022)

## INTERNATIONAL SEARCH REPORT

International application No.

**PCT/JP2024/014059**

| Box No. III | Observations where unity of invention is lacking (Continuation of item 3 of first sheet) |

This International Searching Authority found multiple inventions in this international application, as follows:

Claims are classified into the following two inventions.
(Invention 1) Claims 1-7 and 9-18

Claim 1 has the special technical feature in which a gas treatment device comprises: an absorber for contacting a gas to be treated containing an acid compound, which generates an acid when being dissolved in water, and a treatment liquid which is phase separated into a first phase portion mainly containing an amine and a second phase portion mainly containing a second component by absorption of the acidic compound while being in a state in which the amine and the second component are mixed in a state before absorbing the acidic compound and for causing the acid compound contained in the gas to be treated to be absorbed to the treatment liquid; and a regenerator for separating the acidic compound from the treatment liquid by heating the treatment liquid having absorbed the acidic compound, the gas treatment device comprising a treatment liquid recovery unit for recovering the treatment liquid accompanied by a treatment liquid-containing gas, by bringing at least one of the first phase portion and the second phase portion discharged from the absorber into contact with the treatment liquid-containing gas which is the gas in the absorber after the acidic compound from the gas to be treated is absorbed into the treatment liquid, or is the gas in the regenerator containing the acidic compound," and thus is classified as invention 1.

Claims 2-7 and 9-18 have a special technical feature same or corresponding to the special technical feature, and are thus classified as invention 1.

(Invention 2) Claims 8 and 19

Claim 8 shares, with claim 1 classified as invention 1, a common technical feature of "a gas treatment device comprising: an absorber for contacting a gas to be treated containing an acid compound, which generates an acid when being dissolved in water, and a treatment liquid which is phase separated into a first phase portion mainly containing an amine and a second phase portion mainly containing a second component by absorption of the acidic compound while being in a state in which the amine and the second component are mixed in a state before absorbing the acidic compound and for causing the acid compound contained in the gas to be treated to be absorbed to the treatment liquid; and a regenerator for separating the acidic compound from the treatment liquid by heating the treatment liquid having absorbed the acidic compound." In addition, claim 19 has technical features corresponding to the common technical features. However, the technical feature does not make a contribution over the prior art in light of the disclosures of documents 1 (JP 2019-98226 A (KABUSHIKI KAISHA KOBE SEIKO SHO) 24 June 2019 (2019-06-24) (in particular, see paragraphs [0023]-[0053], fig. 1), and thus cannot be said to be a special technical feature. Also, there are no other same as or corresponding special technical features between these inventions.

In addition, claims 8 and 19 are not dependent on claim 1. Furthermore, claims 8, 19 are not substantially identical to or similarly closely related to any of the claims classified as invention 1.

Therefore, claims 8 and 19 cannot be classified as invention 1.

Claim 8 has the special technical feature in which "a gas treatment device comprises: an absorber for contacting a gas to be treated containing an acid compound, which generates an acid when being dissolved in water, and a treatment liquid which is phase separated into a first phase portion mainly containing an amine and a second phase portion mainly containing a second component by absorption of the acidic compound while being in a state in which the amine and the second component are mixed in a state before absorbing the acidic compound and for causing the acid compound contained in the gas to be treated to be absorbed to the treatment liquid; and a regenerator for separating the acidic compound from the treatment liquid by heating the treatment liquid having absorbed the acidic compound, the gas treatment device comprising a separation promoting gas supply unit that supplies, to the regenerator, a separation promoting gas which promotes separation of the acidic compound from the treatment liquid and consist of a gas containing moisture or water vapor as a gas ; and a moisture removal unit that removes moisture contained in the separation promoting gas supplied to the regenerator." Also, it can be said that claim 19 has the special technical feature corresponding to the special technical feature of the claim 8, and thus, claims 8 and 19 are classified as invention 2.

Form PCT/ISA/210 (continuation of first sheet) (July 2022)

**INTERNATIONAL SEARCH REPORT**

| International application No. |
| --- |
| **PCT/JP2024/014059** |

| **Box No. III**   Observations where unity of invention is lacking (Continuation of item 3 of first sheet) |
| --- |

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

| International application No. |
| --- |
| **PCT/JP2024/014059** |

| Patent document cited in search report | | | Publication date (day/month/year) | Patent family member(s) | | | Publication date (day/month/year) |
| --- | --- | --- | --- | --- | --- | --- | --- |
| JP | 2019-98226 | A | 24 June 2019 | US | 2021/0016226 | A1 | |
| | | | | entire text, all drawings | | | |
| | | | | WO | 2019/107136 | A1 | |
| | | | | EP | 3702015 | A1 | |
| | | | | CN | 111372671 | A | |
| WO | 2016/144179 | A1 | 15 September 2016 | US | 2018/0272269 | A1 | |
| | | | | EP | 3067108 | A1 | |
| JP | 2018-187553 | A | 29 November 2018 | US | 2018/0311610 | A1 | |
| | | | | entire text, all drawings | | | |
| | | | | CN | 108786380 | A | |
| JP | 2015-508709 | A | 23 March 2015 | US | 2013/0230440 | A1 | |
| | | | | entire text, all drawings | | | |
| | | | | WO | 2013/127765 | A1 | |
| | | | | EP | 2819765 | A1 | |
| JP | 2017-39105 | A | 23 February 2017 | US | 2018/0193798 | A1 | |
| | | | | entire text, all drawings | | | |
| | | | | WO | 2017/033821 | A1 | |
| | | | | CN | 107921360 | A | |
| JP | 2021-7938 | A | 28 January 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6906766 B
- JP 5968159 B
- JP 2023110796 A